(19) Europäisches Patentamt / European Patent Office / Office européen des brevets

(11) **EP 4 512 775 A1**

(12) **EUROPEAN PATENT APPLICATION**
published in accordance with Art. 153(4) EPC

(43) Date of publication:
**26.02.2025 Bulletin 2025/09**

(21) Application number: **22937945.8**

(22) Date of filing: **22.04.2022**

(51) International Patent Classification (IPC):
**C01G 23/00** (2006.01)

(52) Cooperative Patent Classification (CPC):
**C01G 23/00**

(86) International application number:
**PCT/CN2022/088502**

(87) International publication number:
**WO 2023/201709 (26.10.2023 Gazette 2023/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Zhao, Yuanyun**
**Guangdong 523000 (CN)**

(72) Inventors:
• **LI, Yanjun**
**Suzhou, Jiangsu 215500 (CN)**
• **ZHAO, Yuanyun**
**Dongguan, Guangdong 523000 (CN)**

(74) Representative: **Boult Wade Tennant LLP**
**Salisbury Square House**
**8 Salisbury Square**
**London EC4Y 8AP (GB)**

(54) **NANO METAL OXIDE, METHOD FOR PREPARING SAME, AND USE THEREOF**

(57) This invention relates to a method for preparing nano metal oxides and its use. The preparation method involves reacting a low-purity initial alloy containing the target metal element M and Al/Zn with a heated concentrated alkaline solution. Under specific reaction conditions, the initial alloy undergoes intense hydrogen evolution and Al/Zn-removal reaction, resulting in nanoscale fragmentation, followed by shape and composition reconstruction to form nano M oxides. Through further post-treatment, crystalline nano M oxides or modified nano M oxides can be obtained. This method is simple, fast, cost-effective, and suitable for large-scale production. It enables the preparation of nano metal oxides with various crystallinities, which have promising applications in fields including composite materials, catalytic materials, ceramic materials, refractory materials, advanced electronic materials, battery materials, chromogenic materials, wave-absorbing materials, wastewater degradation materials, antimicrobial materials, coatings, pigments, thermal spray materials, and sensors.

Figure 17

## Description

## TECHNICAL FIELD

This invention relates to the field of nanomaterials technology, particularly to a nano metal oxide and its preparation method and applications.

## BACKGROUND

Nano metal oxide materials are widely used in fields such as composite materials, catalytic materials, ceramic materials, refractory materials, advanced electronic materials, battery materials, photochromic materials, wave-absorbing materials, wastewater degradation materials, antimicrobial materials, coatings, pigments, thermal spraying materials, sensors, and more. Current methods for preparing nano metal oxide materials include sol-gel methods, alkoxide hydrolysis, forced hydrolysis, solution gas-phase decomposition, wet chemical synthesis, microemulsion methods, etc. However, these methods either require high temperatures, high pressures, and other harsh equipment and conditions, or they involve multiple reactants and several reaction steps, greatly limiting the low-cost preparation and widespread application of nano metal oxide materials. Therefore, developing new preparation methods for nano metal oxides with mild reaction conditions, simple reactants, and short-flow process is of significant importance.

## SUMMARY

Based on this, it is necessary to provide a preparation method for nano metal oxides that is simple in process and suitable for large-scale production, which includes the following aspects:
In the first aspect, a preparation method for nano metal oxides, characterized by comprising the following steps:

Step 1: Providing an initial alloy, wherein the initial alloy contains elements from M-class, T-class, and A-class; wherein the M-class elements include at least one of Cr, V, Nb, Ta, W, Mo, Mn, Y, La, Ce, Pr, Nd, Pm, Sm, Eu, Gd, Tb, Dy, Ho, Er, Tm, Yb, and Lu; the T-class elements include at least one of Al and Zn; the A-class elements include at least one of O, H, Na, K, Mg, Ca, Li, and Si; the composition of the initial alloy is primarily $A_xT_yM_z$, where x, y, and z represent the atomic percentage contents of the corresponding elements, and $0 \leq x \leq 15\%$, $40\% \leq y \leq 95\%$, $5\% \leq z \leq 60\%$, with x<z; the solidification structure of the initial alloy is primarily composed of M-T intermetallic compounds;

Step 2: Reacting the initial alloy with an alkali solution to induce hydrogen evolution and T-removal reaction; wherein by controlling the temperature and concentration of the alkali solution, the reaction interface is advanced inward from the surface of the initial alloy at an average rate of no less than 2 $\mu$m/min during the reaction process; during the reaction, the initial alloy undergoes nano-fragmentation through the hydrogen evolution and T-removal reaction, and nano-scale solid M-containing product is generated through shape and composition reconstruction; the shape of the solid M-containing product has at least one dimension in the three-dimensional direction not exceeding 500 nm;

Step 3: Collecting, after the hydrogen evolution and T-removal reaction is completed, the solid M-containing product from the reaction system, to obtain nano M oxide; wherein the nano M oxide includes at least one of low-crystallinity nano M oxide, crystalline nano M oxide, or nano hydrated M oxide; wherein the nano hydrated M oxide specifically refers to nano M hydroxide; the shape of the nano M oxide has at least one dimension in the three-dimensional direction not exceeding 500 nm.

In Step 1:

Further, the M-class elements include at least one of Cr, V, Nb, Ta, W, Mo, Mn, Y, and Gd; Further, the M-class elements include Cr;
Further, M includes V; M includes Nb; M includes Ta; M includes W; M includes Mo; M includes Mn;
Further, the M-class elements include at least one of Y, La, Ce, Pr, Nd, Pm, Sm, Eu, Gd, Tb, Dy, Ho, Er, Tm, Yb, and Lu;
Further, the T-class elements include Al;
Further, the T-class elements include Zn;
Further, the A-class elements include at least one of O, Si, and Mg;
Further, $0 < x \leq 15\%$; Further, $0.01\% \leq x \leq 15\%$; Further, $0.1\% \leq x \leq 10\%$; Further, $0.3\% \leq x \leq 10\%$; Further, $45\% \leq y \leq 94.5\%$; Further, $45\% \leq y \leq 81\%$; Further, $45\% \leq y \leq 76\%$; Further, $49\% \leq y \leq 76\%$; Further, $5\% \leq z \leq 54.5\%$; Further, $19\% \leq z \leq 54.5\%$; Further, $24\% \leq z \leq 54.5\%$; Further, $24\% \leq z \leq 50\%$; Further, $2x < z$;
Further, in the initial alloy, the atomic percentage of the A-class elements is higher than that in an initial alloy obtained by smelting high-purity T and M elements from commercially available pure raw materials;
Further, the initial alloy is prepared by solidifying an alloy melt containing T-class , M-class , and A-class elements, where the solidification process of the alloy forms a solidification structure mainly composed of M-T intermetallic compounds;
Further, in the solidification structure of the initial alloy, the A-class elements are present in the M-T intermetallic compounds, or in other components outside of the M-T intermetallic compounds, or in both cases simultaneously;

Further, the solidification rate of the initial alloy melt is 0.01 K/s to $10^8$ K/s;

Further, the solidification rate of the initial alloy melt is 1 K/s to $10^8$ K/s;

Further, the M-T intermetallic compound refers to a phase whose composition is mainly M-T intermetallic compound, i.e., the X-ray diffraction (XRD) phase analysis of the compound shows that it is primarily an M-T intermetallic compound;

Further, the main stoichiometric relationship of M and T in the M-T intermetallic compound phase includes at least one of $MT_4$, $MT_3$, $M_4T_{11}$, $MT_2$, $M_5T_8$, $M_3T_8$, $M_2T_3$, and MT;

Further, the M-T intermetallic compound phase may also contain other elements besides M and T, such as A-class elements;

Further, the M-T intermetallic compound can be a single-phase compound, such as $NbAl_3$, $(Nb-Ta)Al_3$, or it can be a multiphase intermetallic compound formed by different M sub-elements and T elements, such as a composite intermetallic compound formed by $TaA1_3$ and $YAl_3$; Furthermore, the initial alloy does not contain T-phase, where the T-phase is a phase primarily composed of T-class elements.

Further, the shape of the initial alloy has an average size in any of the three dimensions greater than 4 $\mu$m;

Further, the shape of the initial alloy has an average size in any of the three dimensions greater than 10 $\mu$m;

Further, the shape of the initial alloy has an average size in any of the three dimensions greater than 15 $\mu$m;

Further, the shape of the initial alloy includes at least one of granular, fibrous, strip-shaped, band-shaped, and plate-shaped;

Further, the source of the A-class elements in the initial alloy includes T raw material introduction, M raw material introduction, or introduction during the initial alloy smelting process;

Further, when x > 0, the A-class element content in the T raw material is higher than that in commercially available high-purity T raw material; for example, in the case of Al, the impurity content of commercially available high-purity Al is generally less than 0.01%, while the impurity content in industrial aluminum ingots (lower purity Al) used for remelting is generally 0.3% to 1.2%, such as Al ingots with a grade of A199.00, where Si content can reach up to 0.4%; thus, industrial aluminum ingots or lower purity aluminum raw materials can be used in this application;

Further, when x > 0, the A-class element content in the M raw material is higher than that in commercially available high-purity M raw material; for example, the O impurity content in commercially available high-purity Y is less than 0.1% (atomic ratio), while the O impurity content in ordinary Y (lower purity Y) is generally over 0.5%; thus, this application can use commercially available ordinary Y or lower purity Y raw materials to prepare the initial alloy.

When the T or M raw materials are low-purity materials containing A-class elements, the A-class elements are simultaneously introduced into the alloy melt, so that the initial alloy also contains A-class elements. For example, ordinary rare earth raw materials contain oxygen (O), and industrial remelting aluminum ingots contain silicon (Si), which results in the initial alloy containing O and Si elements.

Further, the A-class elements may also originate from the atmosphere or furnace lining during the alloy melting process.

Further, the alloy melting process is carried out in an atmospheric environment.

Further, when the initial alloy is in ribbon form, it can be prepared by methods such as the melt spinning method.

Further, when the initial alloy is in granular form, a larger volume initial alloy ingot can be prepared by casting, and then the ingot is crushed into initial alloy particles.

In Step 2,

Further, the alkali solution comprises at least one of NaOH, KOH, LiOH, RbOH, CsOH, $Ba(OH)_2$, $Ca(OH)_2$, and $Sr(OH)_2$ solutions.

Further, the solvent in the alkali solution contains water; preferably, the solvent in the alkali solution is water.

Further, the concentration of the alkali in the alkali solution is 3-30 mol/L; further, the concentration of the alkali in the alkali solution is 5.1-30 mol/L; preferably, the concentration of the alkali in the alkali solution is 5.1-15 mol/L; more preferably, the concentration of the alkali in the alkali solution is 7-15 mol/L.

Further, the alkali in the alkali solution reacting with the initial alloy is in an excess dosage, with the volume of the alkali solution being at least five times the volume of the initial alloy, allowing the reaction to proceed at a high alkali concentration.

Further, the volume of the alkali solution is at least ten times the volume of the initial alloy. Further, the volume of the alkali solution is at least twenty times the volume of the initial alloy. Further, the reaction temperature of the initial alloy and the alkali solution corresponds to the temperature of the alkali solution.

Further, under a certain alkali concentration condition, the temperature of the alkali solution ($T_1$) should ensure that during the hydrogen evolution and T-removal reaction, the reaction interface progresses into the initial alloy surface at an average rate of at least 2 $\mu$m/min, and the initial alloy undergoes nanofracture via the hydrogen evolution and T-removal reaction, i.e., the reaction rate or reaction time (since the reaction rate and initial alloy size are determined, the reaction time is also determined; the hydrogen evolution and T-removal reaction time is the time required for the reaction-generated gas to become undetectable by the naked eye) and the reaction effect determine the temperature $T_1$ and concentration of the alkali solution.

Further, the average rate of 2 $\mu$m/min is the critical reaction rate for nanofracture of the initial alloy via the hydrogen evolution and T-removal reaction.

Further, the nanofracture refers to the initial alloy being fractured by the hydrogen evolution and T-removal reaction into a single intermediate product or product with at least one dimension in the three-dimensional direction smaller than 500 nm.

Further, the nanofracture refers to the initial alloy being fractured by the hydrogen evolution and T-removal reaction into a single intermediate product or product with at least one dimension in the three-dimensional direction smaller than 250 nm.

Further, the temperature of the alkali solution is $T_1$, and $T_1 \geq 60°C$; further, $T_1 \geq 70°C$; further, $T_1 \geq 80°C$; further, $T_1 \geq 90°C$.

Further, when the initial alloy mainly comprises at least one of Cr, V, Nb, Ta, W, Mo, and Mn in the M element, $T_1 \geq 60°C$.

Further, when the initial alloy mainly comprises at least one of Cr, V, Nb, Ta, W, and Mo in the M element, $T_1 \geq 60°C$.

Further, when the initial alloy mainly comprises at least one of Y, La, Ce, Pr, Nd, Pm, Sm, Eu, Gd, Tb, Dy, Ho, Er, Tm, Yb, and Lu in the M element, $T_1 > 100°C$.

Further, when the initial alloy comprises at least one of Cr, V, Nb, Ta, W, Mo, Mn, Y, La, Ce, Pr, Nd, Pm, Sm, Eu, Gd, Tb, Dy, Ho, Er, Tm, Yb, and Lu in the M element, and T element comprises Zn, $T_1 \geq 60°C$.

Further, when the initial alloy comprises at least one of Cr, V, Nb, Ta, W, Mo, Mn, Y, La, Ce, Pr, Nd, Pm, Sm, Eu, Gd, Tb, Dy, Ho, Er, Tm, Yb and Lu in the M element, and T element comprises at least one of Al and Zn, $100°C < T_1$.

Further, the reaction between the initial alloy and the alkali solution is carried out at atmospheric pressure or high pressure.

Further, the reaction between the initial alloy and the alkali solution is carried out in a sealed container.

In a sealed container, when the pressure inside the container exceeds atmosphere pressure, it is considered high pressure; additionally, if the gas generated during the reaction cannot be vented, it will form additional high pressure.

Further, when the reaction is carried out in a sealed container, the initial alloy and the alkali solution are first placed separately within the container. Once the temperature of the alkali solution reaches the set reaction temperature, the initial alloy and alkali solution are brought into contact to undergo the reaction.

Further, in a sealed container, the temperature of the alkali solution can exceed its boiling point under atmosphere pressure.

Further, $100°C < T_1 \leq T_{f\,solution}$, and the reaction between the initial alloy and the alkali solution is carried out at atmosphere pressure, where $T_{f\,solution}$ is the boiling point of the alkali solution at atmosphere pressure.

Further, the reaction is carried out under atmospheric pressure, which generally refers to 1 standard atmospheric pressure, where the boiling point of water is 100°C. When alkali is dissolved in water, the boiling point of the alkaline solution at 1 standard atmosphere pressure is higher than 100°C, and the higher the concentration of the alkali, the higher the boiling point. For example, a 5 mol/L NaOH solution has a boiling point of about 108°C; a 7 mol/L NaOH solution has a boiling point of about 112°C; a 10 mol/L NaOH solution has a boiling point of about 119°C; a 12 mol/L NaOH solution has a boiling point of about 128°C; a 15 mol/L NaOH solution has a boiling point of about 140°C; a 17 mol/L NaOH solution has a boiling point of about 148°C; a 20 mol/L NaOH solution has a boiling point of about 160°C; a 25 mol/L NaOH solution has a boiling point of about 180°C; a 10 mol/L KOH solution has a boiling point of about 125°C; a 12 mol/L KOH solution has a boiling point of about 136°C; a 15 mol/L KOH solution has a boiling point of about 150°C.

Further, $101°C \leq T_1 \leq T_{f\,solution}$.

Further,

$$105°C \leq T_1 \leq T_{f\,solution}.$$

Further,

$$101°C \leq T_{f\,solution} - 5°C \leq T_1 \leq T_{f\,solution}.$$

Further,

$$101°C \leq T_{f\,solution} - 2°C \leq T_1 \leq T_{f\,solution}.$$

More preferably, the temperature of the alkali solution is $T_{f\,solution}$, i.e., $T_1 = T_{f\,solution}$.

Since the highest temperature that the reaction solution can reach under atmospheric pressure is its boiling point temperature ($T_{f\,solution}$), once the temperature reaches this point, further heating will not increase the temperature of the solution, and it will only boil. To increase the reaction temperature, the concentration of the alkali solution can be raised, thereby achieving a higher boiling point temperature. Therefore, controlling the boiling point temperature is the easiest, simplest, and most precise method. Moreover, under the same concentration, the required reaction time at the boiling point temperature is shorter than the reaction time at other temperatures below the boiling point.

The T-class elements includes at least one of Al and Zn, both of which are amphoteric metals. They can react with hot concentrated alkali solutions to form salts that dissolve in the alkali solution. As for the A-class elements, although they are generally impurity elements in the initial alloy raw material or in the initial alloy itself, alkali metals or alkaline earth metals like Na, K, Mg, Ca, Li, etc., which share the same cations as those in the alkali solution, will also form ions and enter the solution. Under atmospheric pressure, elements like O and H are also present in the alkali solution. For Si elements, they can also react with hot concentrated alkali solution and enter the solution. Therefore, both the A elements and T elements can dissolve in the hot alkali solution.

Further, during the reaction process in Step 2, the initial alloy undergoes intense hydrogen evolution and T-removal reactions, resulting in nanofracture and the formation of nanoscale solid products containing M, with shape and composition reorganization. The characteristics of the hydrogen evolution and T-removal reaction include: the T element in the initial alloy dissolves into the solution while hydrogen gas is released.

Further, the intensity of the hydrogen evolution and T-removal reaction is related to the rate at which the reaction interface advances from the surface of the initial alloy towards the interior. The higher the alkali concentration and the higher the temperature of the alkali solution, the faster the advancement rate of the reaction interface, and the more intense of the reaction.

Further, during the hydrogen evolution and T-removal reaction, ultrasound is applied to further enhance the nanofracture effect and increase the reaction rate.

Further, the frequency of the ultrasound is between 20 kHz and $10^6$ kHz.

For example, when the NaOH concentration is 10 mol/L, during the reaction process of the initial alloy primarily composed of $NbAl_3$ intermetallic compound containing O and Si with the alkali solution, the rate of advancement of the reaction interface from the surface of the initial alloy to the interior is as follows:

60°C $\leq T_1 \leq$ 80°C: the average advancement rate of the reaction interface is about 2 $\mu$m/min to 7 $\mu$m/min.

80°C $\leq T_1 \leq$ 90°C: the average advancement rate of the reaction interface is about 7 $\mu$m/min to 15 $\mu$m/min.

90°C $< T_1 \leq$ 100°C: the average advancement rate of the reaction interface is about 15 $\mu$m/min to 30 $\mu$m/min.

100°C $< T_1 \leq$ 110°C: the average advancement rate of the reaction interface is about 30 $\mu$m/min to 50 $\mu$m/min.

110°C $< T_1 <$ 119°C: the average advancement rate of the reaction interface is about 50 $\mu$m/min to 120 $\mu$m/min.

$T_1 = T_{f\,solution}$: The average advancement rate of the reaction interface is greater than 120 $\mu$m/min.

Further, during the reaction, the reaction interface advances from the surface of the initial alloy to the interior at an average rate of at least 7 $\mu$m/min.

Further, the reaction interface advances from the surface of the initial alloy to the interior at an average rate of at least 15 $\mu$m/min.

Further, the reaction interface advances from the surface of the initial alloy to the interior at an average rate of at least 30 $\mu$m/min.

Further, under certain alkali concentration conditions, the temperature of the alkali solution can be adjusted to ensure that during the hydrogen evolution and T-removal reaction, the reaction interface advances at an average rate of at least 2 $\mu$m/min from the surface of the initial alloy to the interior, and the initial alloy undergoes nano-fragmentation during the process. Therefore, under different initial alloy or alkali solution conditions, when the reaction interface advances at least 2 $\mu$m/min during the hydrogen evolution and T-removal reaction, the required reaction temperature may be below 60°C. Particularly when ultrasonic treatment is applied, the required reaction temperature may be even lower.

Further, the nano-fragmentation refers to the process in which the reaction interface of the initial alloy is fragmented into nanometer-scale intermediate products or products through the hydrogen evolution and T-removal reaction, and simultaneously undergoes shape and composition reorganization to form nanoscale solid products containing M. During this process, the intense release of hydrogen gas from the hydrogen evolution and T-removal reaction promotes the nano-fragmentation of the intermediate products or products, as well as the diffusion distribution of products in the alkaline solution when the products leave the reaction interface.

Further, the nano-fragmentation refers to the case where the size of the solid product containing M is smaller than the size of the initial alloy before the nano-fragmentation.

Further, shape reorganization means that the nanoscale solid products containing M obtained from the hydrogen evolution and T-removal reaction do not merely undergo physical fragmentation into nanoporous structures (ligaments), but instead undergo shape changes in addition to physical fragmentation.

Further, the solid products containing M exhibit particle dispersibility.

Further, the different valence states of M in the nanomaterials result in different types of nano oxides. For example, Mn oxide can be MnO or $MnO_2$.

Further, the size of the solid product containing M is less than 0.25 times the size of the initial alloy before the nano-fragmentation.

Further, the size of the solid product containing M is less than 0.05 times the size of the initial alloy before the nano-fragmentation.

Further, the nano-fragmentation refers to the process in which the initial alloy is fragmented during the hydrogen evolution and T-removal reaction into intermediate products or products that have at least one dimension less than 500 nm.

Further, the solid products containing M have a shape in which at least one dimension in three-dimensional direction is no more than 500 nm.

Further, the solid products containing M have a shape in which at least one dimension in three-dimensional direction is no more than 250 nm.

Further, the solid products containing M have a shape in which at least one dimension in three-dimensional direction is no more than 150 nm.

Further, the shape of the solid products containing M includes at least one of following: thin-film, particle, platelet, rod-like, tube-like, and flocculent. The flocculent structure refers to extremely fine microstructures that aggregate together without distinct edges.

Further, while the solid products containing M may softly aggregate together, they do not form a rigid three-dimensional continuous network structure, and do not retain the original shape of the initial alloy.

Further, when the solid products containing M are primarily in the form of thin films, their thickness ranges from 0.25 nm to 30 nm, and the average area of the thin films is larger than 100 $nm^2$.

Further, when the solid products containing M are primarily in the form of particles, their particle size range is from 1.5 nm to 500 nm, preferably 1.5 nm to 200 nm, and more preferably 1.5 nm to 100 nm.

Further, when the solid products containing M are primarily in the form of platelets, their thickness range is from 1.5 nm to 100 nm, preferably 5 nm to 30 nm, and more preferably 5 nm to 20 nm. Additionally, the average area of the platelets is larger than 100 $nm^2$.

Further, when the solid products containing M are primarily in the form of flocculent structures, the size of the flocculent microstructure ranges from 1 nm to 15 nm.

Further, when the solid products containing M are primarily in the form of rod-like structures, they include tubular or rod-like shapes, with diameters ranging from 2 nm to 200 nm, and preferably 2 nm to 50 nm. The length-to-diameter ratio is greater than 2. When the length-to-diameter ratio is extremely high, the rod-like structure can be considered fiber-like.

Further, the solid products containing M include at least one of the following: low crystallinity nano M oxide, crystalline nano M oxide, or nano hydrated M oxide.

Further, the low-crystallinity nano M oxide includes amorphous nano M oxide.

Since nano- M hydroxide can be considered as a combination of nano M oxide and $H_2O$, it can be converted into nano M oxide by heating and dehydrating at lower temperatures. Therefore, the nano hydrated M oxide is essentially nano M hydroxide.

Further, the nano M oxide can be a single nano M oxide, or it can be a composite of nano M oxides composed of different sub-elements of M, such as a composite of Y oxide and Ta oxide (both Y and Ta are sub-elements of M).

Further, the degree of nano-fragmentation and shape reorganization is related to the temperature of the alkali solution. The higher the temperature of the alkali solution, the greater the degree of nano-fragmentation, and the smaller the particle size of the solid products containing M.

Further, to enhance the degree of nano-fragmentation, ultrasonic dispersion treatment can be applied.

Further, when $60°C \leq T_1 \leq 100°C$, the degree of nano-fragmentation and shape reorganization is relatively high, and as the temperature increases, the degree of fracturing and shape reorganization increases.

Further, when $100°C < T_1 < T_{f\ solution}$, the degree of nano-fragmentation and shape reorganization is very high, and full fracturing can be nearly achieved.

Preferably, when $T_1 = T_{f\ solution}$, the degree of nano-fragmentation and shape reorganization is the highest and most thorough. This is because the boiling gas produced at the boiling point temperature greatly promotes the fracturing and shape reorganization process through the gas expansion effect generated by nucleation and growth on the solid products.

Further, during the reaction process, the nanoscale solid products containing M generated by shape and composition reorganization will not remain at the original reaction interface of the initial alloy. Instead, as they are generated, they will diffuse and spread further into the alkali solution through diffusion and convective currents of the alkali solution.

Further, the shape and composition reorganization refers to the massive change in shape and composition of the products obtained after the hydrogen evolution and T-removal reaction and nano-fragmentation of the initial alloy. The products generated are nanoscale solid products containing M with completely different shapes and compositions compared to the initial micron-sized or millimeter-sized alloy. These products exhibit obvious fracturing at the nanoscale.

Further, the generated nanoscale solid products containing M are not primarily in the form of a three-dimensional continuous network nanoporous structure or a porous skeletal structure.

It should be noted that the three-dimensional continuous network nanoporous structure or porous skeleton structure refers to the nanoporous structure or porous skeleton structure obtained through the ordinary de-alloying reaction, where the three-dimensional continuous network of pores exhibits rigid 3D geometry. The shape of such structures remains unchanged under the effects of gravity or surface tension. The solid M-containing products prepared in this application, which have not undergone heat treatment or sintering, when aggregated into clusters, may appear to have characteristics similar to nanoporous structure or porous skeleton structures when observed under TEM or SEM. However, the particles are soft-agglomerated and the connection between particles does not exhibit rigidity. The shape of the agglomerate is variable under the effects of gravity or surface tension and can be dispersed through dispersion methods.

Furthermore, the hydrogen evolution and T-removal reaction transforms the micron or millimeter-scale initial alloy into a large number of nanoscale solid M-containing products via a stepwise nano fragmentation and shape reconstruction process, starting from the surface inward.

Moreover, the reaction of the initial alloy with the alkaline solution at temperatures of $T_1 \geq 60°C$, especially when $T_1 > 100°C$, is critical for the preparation of the nanoscale solid M-containing products. In a comparative example, under atmosphere pressure, when the initial alloy powder, primarily composed of $NbAl_3$ intermetallic compounds containing O and Si, reacts with 10 mol/L NaOH solution at 25°C for 2 hours (where the average reaction front rate is less than 0.5 $\mu$m/min), the shape of the initial alloy powder remains largely unchanged, still being micrometer-sized, original fragmented, and angular particles, as shown in Comparative Example 1. At lower reaction temperatures, the microstructure does not predominantly generate nanoscale, fragmented solid M-containing products. Instead, it forms nanoscale porous structures that retain rigidity on the microscopic level. This nano porosity, formed through a three-dimensional network, maintains the original alloy powder's shape, including its angular appearance. The particle size remains similar to the original alloy powder, mainly in the micrometer range, as shown in Comparative Example 1. Therefore, the reaction between the initial alloy and the alkaline solution at lower temperatures, close to room temperature, leads to entirely different products with distinctly different morphologies compared to the reaction described in this application.

In particular, when the reaction occurs at atmospheric pressure and at the boiling point temperature of the alkaline solution ($T_{f \ solution}$), the composition of the solution undergoes significant changes. Specifically, within the temperature range below the boiling point of the alkaline solution, the solvent primarily exists as liquid water. However, near or at the boiling point temperature of the alkaline solution, the solvent not only contains liquid water and steam generated by boiling but also includes critical state water transitioning from liquid to vapor. Moreover, due to the presence of reactants and previously generated nanoscale reaction products in the solution, according to the principle of heterogeneous nucleation, a large number of vaporized particles are produced during boiling, putting the reaction system into a fully boiling and vaporizing environment. In this special environment, the solubility and state of atmospheric gases (oxygen and nitrogen) in water are also altered, as the boiling water vapor and hydrogen gas generated by the T-class elements reacting with the alkaline solution change the saturation pressure conditions of dissolved gases in the water.

In particular, during the reaction of the M-T intermetallic compounds with the hot concentrated alkaline solution, a large amount of hydrogen gas is generated as the T-class elements are removed from the alloy. This large amount of hydrogen generated within a short period, along with the substantial vaporization from heterogeneous nucleation, acts on the hydrogen evolution and T-removal reaction interface, creating intense swelling forces that further promote continuous nano fragmentation and shape reconstruction of the initial alloy at the reaction interface. Additionally, the T-salts dissolved in the alkaline solution alter the composition of the reaction solution. These many characteristics of the solution at the boiling point temperature provide a highly specialized boiling reaction environment. Under these unique reaction conditions, a special boiling reaction process occurs, which allows the initial alloy to undergo efficient nano fragmentation and shape reconstruction via the hydrogen evolution and T-removal reaction. As a result, the three-dimensional network-like continuous nano porous structures typically formed during low-temperature or room-temperature dealloying reactions are difficult to maintain. Instead, nanoscale, fragmented solid M-containing products are generated through the unique nano-fragmentation and shape reconstruction process. Because the boiling point temperature of the specific alkaline solution is constant, temperature control becomes highly precise, making it much easier to control the morphology and composition of the products.

In step three :

The completion time of the hydrogen evolution and T-removal reaction can be determined by whether the hydrogen gas evolution has stopped. When no gas evolution is visible to the naked eye, it can be assumed that the hydrogen evolution and T-removal reaction is complete.

In addition to the concentration of the alkaline solution and its temperature, the reaction time required to completely remove T and A elements from the initial alloy through the hydrogen evolution and T-removal reaction is also related to the shape of the initial alloy: the smaller the initial alloy powder particles or the thinner the initial alloy ribbons, the shorter the reaction time needed for the hydrogen evolution and T-removal reaction to be completed. Conversely, the larger the particles or the thicker the initial alloy ribbons, the longer the reaction time will be. Based on the average advance rate of the reaction interface and the size of the initial alloy, the minimum reaction time required for the hydrogen evolution and T-removal reaction to complete can be calculated. For example, when the initial alloy is in the form of strips with thickness of d, and the average advance rate of the reaction interface is v, considering that the reaction interface advances from both the top and bottom surfaces of the strip, the reaction time t can be calculated as:

$$t=0.5d/v.$$

Similarly, when the initial alloy is in the form of particles with diameter d, and the average advance rate of the reaction interface is v, the reaction time $t$ can also be calculated as: $t=0.5d/t$.

In a particular embodiment, the initial alloy ribbons, composed of $NbAl_3$ intermetallic compounds containing O and Si, react with a 10 mol/L NaOH solution at its boiling point temperature (approximately 119°C). The average advance rate of the reaction interface is about 120 $\mu$m/min. For example, for a 40 $\mu$m thick initial alloy ribbon, the hydrogen evolution and Al-removal reaction can be completed in 10 seconds; for a 20 $\mu$m thick initial alloy ribbon, it can be completed in 5 seconds; even for initial alloy coarse particles with a 5 mm diameter, the reaction can be completed in 21 minutes.

Further, the reaction time for the hydrogen evolution and T-removal process can range from 10 seconds to 59 minutes; more specifically, it can range from 10 seconds to 29 minutes, 10 seconds to 9.9 minutes, 10 seconds to 4.9 minutes, 10 seconds to 1 minute, or 10 seconds to 30 seconds.

Further, the shortest possible reaction time for the hydrogen evolution and T-removal process is 10 seconds.

Clearly, the higher the temperature $T_1$ and the thinner the initial alloy or smaller the particle size, the shorter the reaction time required for hydrogen evolution and T-removal. Conversely, if the temperature is lower or the initial alloy is thicker or the particle size is larger, the reaction time will be longer.

After the hydrogen evolution and T-removal reaction is completed, continuing to extend the holding time of the reaction system at the original reaction temperature can still ensure that the product is a nano-sized product with particle dispersibility. However, if the holding time is long enough, the morphology of the product may undergo some changes. In other words, when the reaction time of the initial alloy with the alkaline solution far exceeds the minimum required hydrogen evolution and T-removal reaction time t (for example, lasting for several hours), nano M oxide can still be obtained, but its morphology may change to some extent.

Further, the nano M oxide has particle dispersibility.

Further, different valence states of M in the nano M oxide correspond to different types of nano M oxides. For example, Mn oxide can be either MnO or $MnO_2$.

Further, the size of the nano M oxide is less than 0.25 times the size of the initial alloy before nanofragmentation.

Further, the size of the nano M oxide is less than 0.05 times the size of the initial alloy before nanofragmentation; the size is defined as the volume size.

Further, the shape of the nano M oxide has at least one dimension in the three-dimensional direction that does not exceed 500 nm.

Further, the shape of the nano M oxide has at least one dimension in the three-dimensional direction that does not exceed 250 nm.

Further, the shape of the nano M oxide has at least one dimension in the three-dimensional direction that does not exceed 150 nm.

Further, the process of collecting the M-containing solid product (nano M oxide) includes the separation, cleaning, and drying of the M-containing solid product.

Further, the process of separating and collecting the M-containing solid product includes one of the following processes a) or b):

a) Adding a large amount of cold solvent (e.g., water) to the reaction system, rapidly lowering the temperature of the M-containing solid product and the alkaline solution in the reaction system, while also diluting the concentration of the alkaline solution. Then, performing solid-liquid separation after dilution and cooling. Clearly, the alkaline solution with reduced concentration and temperature is safer and ensures the stability of the product morphology.

b) Filtering the hot alkaline solution and the M-containing solid product together through a filtering device (e.g., a filter mesh) to lower the temperature of the M-containing solid product while achieving solid-liquid separation.

Further, the washing process includes cleaning the M-containing solid product with a diluted acid solution. The washing function includes removing residual alkali from the M-containing solid products.

Further, the shape of the nano M oxide includes at least one of the following: film-like, particle-like, sheet-like, bar-like, rod-like, and flocculent. The flocculent form refers to an extremely fine microstructure that has no obvious edges and is aggregated together.

Further, the shape of the nano M oxide may vary depending on the reaction conditions. For example, different reaction temperatures or different times for maintaining the reaction conditions after the hydrogen evolution and T-removal reaction may result in changes in shape. The nano M oxide may primarily adopt one shape, which may change to another predominant shape, or it may not change at all or only undergo minor changes. Regardless of how the shape changes, it includes at least one of the following: film-like, particle-like, sheet-like, bar-like, rod-like, and flocculent.

Further, although the nano M oxide can form soft aggregates, it does not tightly connect in a three-dimensional continuous network structure to maintain the original appearance of the initial alloy.

Further, the shape of the nano M oxide is completely different from that of the initial alloy, and its particle size undergoes significant fragmentation and reduction.

Further, when the nano M oxide is primarily film-like, its thickness is in the range of 0.25 nm to 30 nm, and the average area of the films is greater than 100 nm$^2$.

Further, when the nano M oxide is primarily particle-like, its particle size range is 1.5 nm to 500 nm; preferably 1.5 nm to 200 nm; more preferably 1.5 nm to 100 nm.

Further, when the nano M oxide is primarily sheet-like, its thickness is in the range of 1.5 nm to 100 nm, preferably 5 nm to 30 nm, and more preferably 5 nm to 20 nm. The average area of the sheets is greater than 100 nm$^2$.

Further, when the nano M oxide is primarily flocculent, the size of its flocculent microstructure is in the range of 1 nm to 15 nm.

Further, when the nano M oxide is primarily rod-like, it includes both tubular and rod-like structures. The diameter range is from 2 nm to 200 nm; preferably from 2 nm to 50 nm. The length-to-diameter ratio is greater than 2. When the length-to-diameter ratio is extremely large, the rod-like structure can be considered fiber-like.

Further, the nano M oxide includes at least one of the following: low-crystallinity nano-M oxide, crystalline nano M oxide, or nano hydrated M oxide.

Further, the low-crystallinity nano M oxide includes amorphous nano M oxide.

Since nano M hydroxide can be considered a combination of nano oxide M and $H_2O$, nano oxide M can be obtained by heating and dehydrating at lower temperatures. Therefore, the nano hydrated M oxide described in this application refers to nano M hydroxide.

Further, the nano oxide M can either be a single nano oxide M or a composite nano oxide M composed of different M-type sub-elements, such as a composite of nano oxides formed from yttrium oxide and tantalum oxide (both Y and Ta are sub-elements of the M-type elements).

In the second aspect, this application also involves a method for preparing nano metal oxides, characterized by performing heat treatment on the nano M oxide prepared using the method described above, thereby obtaining a nano M oxide with improved crystallinity.

Further, the temperature for the heat treatment ranges from 300°C to 2000°C; further, the heat treatment temperature is between 400°C and 2000°C; further, the heat treatment temperature is between 500°C and 2000°C.

Further, the heat treatment time ranges from 1 minute to 24 hours;

Further, the heat treatment time is between 5 minutes and 24 hours;

Further, the heat treatment time is between 30 minutes and 24 hours.

It can be understood that with the extension of heat treatment time and the increase in temperature, the crystallinity of the heat-treated product gradually increases, eventually reaching full crystallization.

Further, during the heat treatment process, changes in the morphology or composition of the nano metal oxide may occur. These changes in composition include changes in the valence state of M (e.g., from a lower valence state to a higher valence state) or changes in the atomic arrangement structure of the oxide.

Further, when the nano M oxide prepared by the method described in the first aspect is crystalline, heat treatment will lead to grain growth.

Further, when the nano M oxide prepared by the method described in the first aspect is partially crystalline, heat treatment will lead to crystallization and grain growth.

Further, when the nano M oxide prepared by the method described in the first aspect is amorphous, heat treatment will lead to crystallization and grain growth.

Further, when the nano M oxide prepared by the method described in the first aspect is nano hydrated M oxide, heat treatment will cause the nano hydrated M oxide to convert into nano M oxide, which will then undergo crystallization and grain growth.

Further, the nano M oxide with improved crystallinity can be a single crystalline nano M oxide or a crystalline nano M oxide composed of different M-type sub-elements, such as crystalline yttrium oxide ($Y_2O_3$) and tantalum oxide ($Ta_2O_5$) (both Y and Ta are sub-elements of M-class elements).

Further, during the heat treatment, the valence state of M in the nano M oxide may change, for example, from a lower valence state to a higher valence state.

Further, the morphology of the nano M oxide with improved crystallinity includes at least one of the following: film-like, particle-like, sheet-like, bar-like, rod-like, and sintered agglomerated.

Further, when the nano M oxide with improved crystallinity is film-like, its thickness ranges from 1 nm to 50 nm, and the average area of the film is greater than 50 nm$^2$.

Further, when the nano M oxide with improved crystallinity is particle-like, its particle size range is from 3 nm to 500 nm; preferably from 3 nm to 250 nm; more preferably from 3 nm to 150 nm; even more preferably from 3 nm to 75 nm.

Further, when the nano M oxide with improved crystallinity is sheet-like, its thickness ranges from 3 nm to 200 nm, preferably from 6 nm to 75 nm, more preferably from 6 nm to 40 nm, and the average area of the sheets is greater than 100 nm$^2$.

Further, when the nano M oxide with improved crystallinity is bar-like, its diameter ranges from 3 nm to 60 nm, and the length-to-diameter ratio is greater than 2.

Further, when the nano M oxide with improved crystallinity is rod-like, it includes both tubular and rod-like structures. The diameter range is from 3 nm to 200 nm, and the length-to-diameter ratio is greater than 2. When the length-to-diameter ratio is very large, the rod-like structure can be considered fiber-like.

Further, when the nano M oxide with improved crystallinity is sintered agglomerated, its particle size increases significantly due to sintering agglomeration, and the particle size range is from 5 nm to 1 mm.

The crystallinity of the nano M oxide with improved crystallinity is related to the heat treatment time and temperature. The higher the temperature and the longer the time, the higher the crystallinity.

Further, the crystallinity of the nano M oxide with improved crystallinity is higher than 50%; further, the crystallinity of the nano M oxide with improved crystallinity is higher than 95%.

In the third aspect, this application also involves a method for preparing nano metal oxides, characterized by comprising the following steps:

Step 1: Providing an initial alloy, wherein the initial alloy contains elements from M-class, T-class, and A-class; wherein the M-class elements include at least one of Cr, V, Nb, Ta, W, Mo, Mn, Y, La, Ce, Pr, Nd, Pm, Sm, Eu, Gd, Tb, Dy, Ho, Er, Tm, Yb, and Lu; the T-class elements include at least one of Al and Zn; the A-class elements include at least one of O, H, Na, K, Mg, Ca, Li, and Si; the composition of the initial alloy is primarily $A_xT_yM_z$, wherein x, y, and z represent the atomic percentage contents of the corresponding elements, and $0 \leq x \leq 15\%$, $40\% \leq y \leq 95\%$, $5\% \leq z \leq 60\%$, with $x < z$; the solidification structure of the initial alloy is primarily composed of M-T intermetallic compounds;

Step 2: Mixing the initial alloy with an alkali solution at a temperature of $T_1$, where $T_{s\_solution} < T_1 \leq T_{f\_solution}$; $T_{f\_solution}$ is the boiling point of the alkali solution involved in the reaction under atmospheric pressure, and $T_{s\_solution}$ is the freezing point of the alkali solution involved in the reaction under atmospheric pressure;

Step 3: Placing the mixture of the initial alloy and the alkali solution in a sealed container, then treating it at a temperature $T_2$ and pressure higher than atmospheric pressure for a certain period of time to collect a product, i.e., obtaion nano M oxide, which has modified morphology and/or composition compared to the intermediate products before the high-pressure treatment; wherein $T_2 > T_{f\_solution}$; the nano M oxide includes at least one of low-crystallinity nano M oxide, crystalline nano M oxide, or nano hydrated M oxide, and the nano hydrated M oxide specifically refers to nano M hydroxide; the shape of the modified nano M oxide has at least one dimension in the three-dimensional direction not exceeding 500 nm.

The Step 1 in this aspect of the method for preparing nano metal oxides is identical to Step 1 described in the first aspect of the method for preparing nano metal oxides, including the detailed description corresponding to Step 1 in the first aspect. Therefore, the detailed explanation of Step 1 is not repeated here.

In Step 2:

Further, the alkali solution includes at least one of the following: NaOH, KOH, LiOH, RbOH, CsOH, $Ba(OH)_2$, $Ca(OH)_2$, and $Sr(OH)_2$ solution.

Further, the solvent in the alkali solution contains water; preferably, the solvent in the alkali solution is water.

Further, the concentration of the alkali in the alkali solution is 3~30 mol/L; more preferably, the concentration of the alkali in the alkali solution is 5~30 mol/L; and even more preferably, the concentration of the alkali in the alkali solution is 7-15 mol/L.

Further, the alkali in the alkali solution mixed with the initial alloy is in excess, and the volume of the alkali solution is at least 5 times the volume of the initial alloy; more specifically, the volume of the alkali solution is at least 10 times the volume of the initial alloy; even more specifically, the volume of the alkali solution is at least 20 times the volume of the initial alloy.

It can be understood that when the initial alloy is mixed with the alkali solution at a temperature of $T_1$, a hydrogen evolution and T-removal reaction occurs simultaneously. The higher the temperature of the alkali solution and the higher its concentration, the faster the reaction rate.

When, during the hydrogen evolution and T-removal reaction process, the reaction interface advances from the surface of the initial alloy inward at an average rate of no less than 2 $\mu$m/min, it corresponds to the situation described in Step 2 in the first aspect. For further details, refer to Step 2 in the first aspect. In this case, during the reaction, the initial alloy undergoes nano-fragmentation via the hydrogen evolution and T-removal reaction and is transformed into nano-scale solid products containing M, with both shape and composition being reconstructed. These nano-oxides of M undergo a subsequent high-temperature and high-pressure reaction process in Step 3, where they can also be further modified in terms of shape and/or composition. Therefore, Step 2 in this aspect includes the situation described in Step 2 in the first aspect, and after this process, Step 3 ini this aspect is performed, which remains within the scope protected by the third aspect of this application.

In this context, modification refers to the change in shape and/or composition of the nano-oxide of M obtained in Step 2 in this aspect. Composition changes may include changes in the oxidation state of M in the oxide (e.g., from low-valent Mn to high-valent Mn) or changes in the atomic arrangement of the oxide.

In the case of Step 3, regardless of whether nano-fragmentation occurs in Step 2 or whether the hydrogen evolution and T-removal reaction in Step 2 is completed, the results of the reaction in Step 3 will not be fundamentally affected. This is because the reaction in Step 3 takes place under longer times, higher temperatures, and higher pressures, and regardless of the product obtained from Step 2, it will undergo modification in shape and/or composition during Step 3.

Further, in Step 2, when the initial alloy is mixed with the alkali solution at a temperature of $T_1$, the hydrogen evolution and T-removal reaction occurs simultaneously, and during the reaction, the reaction interface advances inward from the surface of the initial alloy at an average rate of less than 2 $\mu$m/min.

Further,

$$T_{\text{s solution}} \leq T_1 < 60°C;$$

Further,

$$T_{\text{s solution}} \leq T_1 < 80°C.$$

In Step 3:

Furthermore, the extent of the hydrogen evolution and T-removal reaction in the mixture of the initial alloy and the alkali solution is not limited. Therefore, the solid matter in the mixture can be either the initial alloy itself or a product formed after part or all of the hydrogen evolution and T-removal reaction, including products that have undergone sufficient nano-fragmentation or nano-porous products that have not undergone sufficient nano-fragmentation.

The process of placing the mixture of the initial alloy and the alkali solution into a sealed container involves at least one of the following two options:

a) Directly placing the mixture of the initial alloy and the alkali solution into a sealed container and then processing it at a temperature $T_2$ and a pressure higher than atmospheric pressure.

b) Separating the solid matter in the mixture of the initial alloy and the alkali solution from the alkali solution, then mixing it with a new alkali solution, placing it into a sealed container, and processing it at a temperature $T_2$ and a pressure higher than atmospheric pressure. In this case, the new alkali solution may be the same as the original one or a different type of alkali solution.

Further, the concentration of the new alkali solution is between 0.1 mol/L and 30 mol/L, and more preferably between 5 mol/L and 30 mol/L.

Additionally, the pressure is higher than atmospheric pressure, but less than 100 MPa;

Further, the pressure is higher than atmospheric pressure, but less than 20 MPa.

Further,

$$T_{\text{f solution}} < T_2 \leq 500°C;$$

Further,

$$T_{\text{f solution}} < T_2 \leq 300°C.$$

The time of processing at the $T_2$ temperature above atmospheric pressure is between 1 minute to 2 hours;

Further, the processing time is between 1 minute to 30 minutes;

Further, the processing time is between 1 minute to 10 minutes.

The process described in Step 3 is similar to the strong alkali hydrothermal method, as both involve reactions under conditions of strong alkali, high temperature, and high pressure. However, there are significant differences:

In the strong alkali hydrothermal method, the precursor used is generally a crystalline oxide with a low specific surface area. This requires a long reaction time (e.g., tens of hours) for the O-M bonds to first break and then recombine, achieving modification. In contrast, the modification process in this patent uses alloy precursors, which, even before modification (during the mixing or heating process), have already been converted into oxide M. In most cases, even before modification, the material is a high surface area, low crystallinity nano M oxide, or even if it is crystalline, it still has a high surface area. The higher the surface area, the higher the metastable energy, making modification easier. Therefore, the modification of nano M oxide in this patent requires shorter heat treatment times, which reduces energy consumption, increases efficiency, and can yield products with completely different morphologies. Of course, after the modification process reaches equilibrium, extending the modification time will still result in the corresponding modified products.

Further, the modified nano M oxide includes at least one of the following: low crystallinity nano M oxide, crystalline nano M oxide, or nano hydrated M oxide, where nano hydrated M oxide specifically refers to nano M hydroxide.

Additionally, the low crystallinity nano M oxide is primarily amorphous nano M oxide.

Since nano M hydroxide can be considered a combination of nano M oxide and $H_2O$, it can be converted into nano M oxide by dehydration at relatively low temperatures. Therefore, nano hydrated M oxide is essentially nano M hydroxide.

Further, the crystallinity of the modified nano M oxide is related to the time, temperature, and pressure of the modification process. The higher the temperature, the longer the treatment time, and the higher the pressure, the greater the crystallinity. Therefore, the high-temperature, high-pressure modification is a method to increase the crystallinity of the modified product without significantly lowering the specific surface area.

The shapes of the modified nano M oxide include at least one of the following: film-like, flocculent, particle-like, sheet-like, bar-like and rod-like;

Further, the oxidation states of M in nano M oxide correspond to different types of nanoxide M. For example, Mn oxide can be MnO or $MnO_2$.

Further, the modified nano M oxide exhibits at least one of the following characteristic changes compared to the nano M oxide produced after the hydrogen evolution and T-removal reaction: larger particle size, lower specific surface area, and increased crystallinity.

Further, the M element in the modified nano M oxide predominantly exists in a higher oxidation state.

Further, the crystallinity of the modified nano M oxide increases by at least 50% compared to its crystallinity before high-pressure treatment. For example, if the crystallinity before high-pressure treatment is 10%, and the crystallinity after modification is 16%, the crystallinity of the modified nano M oxide has increased by: (16%-10%)/10%=60%;

Further, the crystallinity of the modified nano M oxide exceeds 20%, and may even exceed 50%.

Further, the modified nano M oxide have a shape in which at least one dimension in three-dimensional direction is no more than 500 nm.

Further, when the modified nano M oxide is particle-like, its particle size range is 3 nm to 500 nm, preferably 3 nm to 200 nm, or more preferably 3 nm to 100 nm.

Further, when the modified nano M oxide is plate-like, the thickness range is 2 nm to 120 nm, preferably 5 nm to 30 nm, or more preferably 5 nm to 20 nm. Additionally, the average area of the plates will be greater than 100 $nm^2$.

Further, when the modified nano M oxide is rod-like, the diameter will range from 3 nm to 50 nm, with an aspect ratio greater than 2.

Further, when the modified nano M oxide is tubular rod-like, the structure may be tubular or rod-shaped, with diameters ranging from 3 nm to 200 nm, preferably 3 nm to 50 nm, and with an aspect ratio greater than 2. If the aspect ratio is extremely large, the tubular rods can be considered fiber-like structures.

Further, the modified nano M oxide can be a single type of nano M oxide or a composite nanoxide M consisting of different M sub-elements, such as a composite of nano metal oxides of Y oxide and Ta oxide (both Y and Ta are sub-elements of the M-class element).

As the fourth aspect, this application also relates to a nano metal oxide, characterized in that the nano metal oxide is prepared through the preparation method according to any one of the aspects from the first aspect to the third aspect, with specific characteristics as detailed in the methods described in those aspects; the specific characteristics include: the nano metal oxide is nano M oxide, wherein the M-class elements include at least one of the following: Cr, V, Nb, Ta, W, Mo, Mn, Y, La, Ce, Pr, Nd, Pm, Sm, Eu, Gd, Tb, Dy, Ho, Er, Tm, Yb, and Lu; the nano M oxide includes at least one of low-crystallinity nano M oxide, crystalline nano M oxide, and nano hydrated M oxide; wherein the nano hydrated M oxide specifically refers to nano M hydroxide; the shape of the nano M oxide has at least one dimension in the three-dimensional direction not exceeding 500 nm.

Further, the nano M oxide exhibits particle dispersibility;

Further, different oxidation states of M in the nano M oxide correspond to different types of nano M oxide. For example, Mn oxide can be MnO or $MnO_2$.

Further, the shape of the nano M oxide includes at least one of the following: film-like, particle-like, sheet-like, bar-like, tubular rod-like, and flocculent.

Further, when the nano M oxide is primarily film-like, its thickness is in the range of 0.25 nm to 50 nm, and the average area of the film is greater than 50 $nm^2$.

Further, when the nano M oxide is primarily particle-like, the particle size range is 1.5 nm to 500 nm, preferably 1.5 nm to 200 nm, or more preferably 1.5 nm to 100 nm.

Further, when the nano M oxide is primarily sheet-like, the thickness range is 1.5 nm to 200 nm, preferably 5 nm to 30 nm, and further preferably 5 nm to 20 nm. Additionally, the average area of the plate is greater than 100 $nm^2$.

Further, when the nano M oxide is primarily tubular rod-like, it includes both tubular and rod-like structures, with a diameter range of 2 nm to 200 nm, and an aspect ratio greater than 2.

Further, when the nano M oxide is primarily sintered flocculent, the particle size increases significantly due to sintering and agglomeration, with a size range from 5 nm to 1 mm.

As the fifth aspect, this invention also relates to an application of the product prepared according to the preparation method according to anyone of the aspects from the first aspect to the third aspect in composite materials, catalytic materials, ceramic materials, refractory materials, advanced electronic materials, battery materials, chromogenic materials, wave-absorbing materials, wastewater degradation materials, antibacterial materials, coatings, pigments, thermal spraying materials, and sensors.

Further, this invention also relates to the application of chromium oxide nanoparticles prepared by the method described in any of the aspects from the first aspect to the third aspect in pigments.

The beneficial effects of this application are mainly reflected in the following aspects:

Firstly, by using low purity initial alloy raw materials primarily composed of M-T intermetallic compounds, and reacting the initial alloy with an alkali solution under specified reaction conditions, this invention creatively achieves the nano-fragmentation of the original alloy while reconstructing its shape and composition to form nano-scale, dispersible nanoparticles of M oxide. This application discovered that when the M-T intermetallic compound reacts with an alkali solution at a relatively high temperature, preferably at the boiling point of the alkali solution, the original alloy's shape is rapidly and completely destroyed, leading to nano-fragmentation, while the shape and composition are reconstructed to form nano-scale M oxides that are highly dispersible.

In contrast, products prepared under room temperature or lower temperature conditions are generally nanoporous metal oxides or nanoporous metals, which still maintain the shape of the original alloy particles before the reaction, including their angular shapes. For example, in Comparative Example 1, under atmosphere pressure, when the $NbAl_3$ intermetallic compound (containing O and Si) reacts with a 10mol/L NaOH solution at 25°C for 2 hours, the shape of the initial alloy powder does not significantly change before and after the reaction. It remains as fragmented powder with angular particles, and no dispersible nanoparticles, nanosheets, or nanorods are formed. Instead, the product is a nanoporous structure that maintains the same appearance as the original alloy powder, with particle sizes generally in the micrometer or tens of micrometers range.

However, in the preparation method of this application, when the initial alloy powder has an average particle size of 10 $\mu$m, after reaction with a concentrated hot alkali solution, the product obtained is a nano-scale M oxide with a particle size of no more than 500nm with high dispersibility. These nanoparticles do not contain secondary nanoporous structures within them, and although they may soft agglomerate together, they do not form a rigid three-dimensional network that maintains the original shape of the initial alloy, including its angular particle shape. In other words, regardless of the size or shape of the initial alloy, the nano-fragmentation during the reaction ensures the formation of dispersible nano-M oxides as the final product.

Therefore, considering that the initial alloy ribbons are generally thick or that the powder particles have larger sizes (e.g., strips typically exceeding 10$\mu$m in thickness, and powder particles with an average size generally greater than 5$\mu$m), reactions between M-T intermetallic compounds and alkali solutions at lower or room temperatures usually produce micrometer-sized, nanoporous metal oxides or nanoporous metals. These products are unsuitable for applications that require small, dispersible particles. In other words, the morphology and size of nano-metal oxide powders are critical factors influencing the dispersion, flowability, and reactivity of the powder material. This application, however, successfully achieves the preparation of highly dispersible nano-M oxides, which has significant positive implications.

Moreover, shape reconstruction occurs simultaneously with nano-fragmentation. The term "shape reconstruction" refers to the process where the nano-scale products obtained through hydrogen evolution and T-removal reactions are not merely fragmented nanoporous structures (ligaments), but instead undergo complete reconstruction. If a low-temperature hydrogen evolution and T-removal reaction results in nanoporous structures, and a high-temperature hydrogen evolution reaction only fragments these porous structures, then it can be called a simple fragmentation process, with the product morphology being fragmented porous ligaments. However, in this application, what happens is not simple fragmentation but shape reconstruction as well. Various morphologies of nano-M oxides, such as plate-like structures, fluffy structures, and especially film-like structures, cannot be obtained by merely fragmenting the nanoporous ligament structures. Therefore, by controlling the reaction temperature, this application creatively achieves the formation of nano-M oxides without relying on the nanoporous structural formation mechanism, avoiding simple fragmentation and instead forming nano M oxides through a unique fragmentation and complete reconstruction process. This has both theoretical and practical significance.

Although the strong alkali hydrothermal method is a well-established technique for preparing nano metal oxides, it requires a high-pressure reaction vessel and typically uses cheap metal oxide raw materials with various morphologies and high-concentration strong alkali solutions (such as NaOH) under high-temperature conditions for long reaction times. The characteristics of the traditional strong alkali hydrothermal method for preparing nano-metal oxides are as follows: 1) It uses different morphologies of cheap metal oxides as precursors (which are already metal oxides); 2) It requires high-pressure reaction vessels under closed high-pressure conditions; 3) The reaction takes place at higher temperatures; and 4) The reaction time is relatively long, usually measured in hours.

In contrast, the method described in this application for preparing nano metal oxides and their subsequent products, although also using strong alkali solutions, differs significantly from the traditional strong alkali hydrothermal method: 1) It primarily uses M-T intermetallic compounds as the precursors; 2) The reaction can be performed in open containers at atmospheric pressure, without the need for a high-pressure closed container; 3) The reaction is preferably conducted at or near the boiling point of the alkali solution, which is much easier to control precisely, and does not require very high temperatures; 4) The reaction can be completed in just a few minutes or even tens of seconds; 5) The M-T intermetallic compounds in the initial alloy precursor undergo intense hydrogen evolution and T-removal reactions, leading to nano-fragmentation, followed by shape and composition reconstruction to form nano M oxides at the nano-scale, instead of generating products with nano-porous structures.

Particularly, the M elements in this application, such as Cr, V, Nb, Ta, W, Mo, Mn, and rare earth elements (Y, La, Ce, Pr, Nd, Pm, Sm, Eu, Gd, Tb, Dy, Ho, Er, Tm, Yb, Lu), have all been selected after extensive research, rather than being chosen arbitrarily. The applicant found that replacing M with elements such as Fe, Co, Ni, Zr, Hf, or Ti leads to different reaction processes and products. For example, replacing M with Fe, Co, and Ni results in products primarily consisting of nanoporous metal (such as Fe, Co, and Ni) powders, e.g., rhenium Ni (the temperature of alkaline solution is generally around 50C°, and the reaction time is usually several tens of minutes), rather than nano-metal oxides like Fe, Co, and Ni. When M is replaced by Zr or Hf, step two of the process of the first aspect results in a clear solution, and no nano-solid products containing M are formed (Zr and Hf will also dissolve in the alkali solution, not remaining as solid materials). When M is replaced by Ti, the outcome of step three of the first aspect is nano titanate acid, not nano Ti oxide.

Secondly, by selecting a reaction temperature near or at the boiling point of the alkali solution (denoted as $T_{f\ solution}$), precise control of the reaction can be achieved. Once the concentration of alkali in the solution is determined, the boiling point temperature at atmospheric pressure is also fixed, which means that the pressure and temperature in the reaction are precisely controlled. At the boiling point of the alkali solution, any excess heat added to the solution will be used to convert water into steam, preventing further increases in temperature. This enables the reaction temperature to be maintained constantly at the boiling point through continuous heating. Even when a large amount of reaction latent heat is generated during the alloy disintegration of M-T intermetallic compounds, the reaction temperature can still be maintained at the boiling point. The precise control of the reaction temperature ensures that the morphology and composition of the products can be carefully controlled, which is highly significant. In this application, the preparation process can be carried out in an open container at atmospheric pressure, and when the reaction needs to be terminated, it can be done by quickly adding cold water or room-temperature water to the reaction solution in just a few seconds or cooling it with a cold filter. This rapid cooling can almost instantaneously lower the temperature and concentration of the reaction system to levels where the reaction can no longer continue, thus preserving the original reaction equilibrium products' composition and morphology. Therefore, the method proposed in this application can ensure precise control over both the morphology and composition of the reaction products. Additionally, by carrying out the reaction near or at the boiling point of the alkali solution, products can be obtained in a very short period of time. For example, when the initial alloy is in the form of a thin strip or fine powder, the reaction time can be less than 1 minute. Hence, the reaction time for the entire preparation process described in this application is much shorter than those reported or disclosed in other methods, providing significant advantages.

Thirdly, this application achieves the goal of preparing nano M oxides using low-purity M raw materials that contain considerable amounts of A elements or T elements, or low-purity initial alloys. Specifically, during the reaction process, the T elements and A elements in the initial alloy are mainly dissolved into the alkali solution, and through subsequent solid-liquid separation, they are removed. By utilizing this principle, high-purity nano M oxide products can be prepared from low-purity initial alloys that contain substantial amounts of A elements. Notably, there is no requirement for controlling the oxygen content in the initial alloy, which means the initial alloy can be prepared under low vacuum or atmospheric conditions, significantly reducing production costs and having clear beneficial effects.

Fourthly, for certain M elements, such as Cr, this application can prepare low-crystallinity nano M oxides, including amorphous nano M oxides. Low-crystallinity or amorphous materials offer two significant advantages: 1) They are in a metastable state, so they have high energy and thus high reactivity, making them highly active with excellent properties, such as superior catalytic performance. 2) They can undergo controlled crystallization through subsequent heat treatment, resulting in products with different degrees of crystallinity or completely crystalline products, each exhibiting distinct properties and suitable for various applications.

Fifthly, this application preferably operates at the boiling point or near the boiling point temperature of the alkali solution (typically in the range of 105°C to 200°C, depending on the alkali concentration), which is a relatively mild temperature range. The initial alloys required for this process can be mass-produced using methods such as alloy melting + casting + crushing or alloy melting + melt spinning, and the raw materials for melting can be of ordinary purity or low-purity M, T, etc. elements. Importantly, the reaction time can be as short as several tens of seconds to a few minutes, making the process extremely efficient. Moreover, reaction parameters like temperature and pressure can be precisely controlled and the reaction can be terminated quickly to obtain the desired product. These features greatly simplify the production process, improve efficiency, and reduce costs, making large-scale and low-cost production of the corresponding products highly feasible.

Sixthly, by applying subsequent heat treatment or modification, the morphology and composition of the prepared nano metal oxides can be further adjusted. This includes altering product morphology, increasing product crystallinity, and adjusting the oxidation states of the M elements in the oxide, thereby enabling the product to be applied in a wide range of applications.

In conclusion, the key innovation of this application lies in using alloy raw materials to provide a quick and simple method for preparing highly dispersible nano metal oxides. The method has the advantages of being simple, easy to operate, efficient, and low-cost. Coupled with heat treatment, this process can produce nano metal oxides with different crystallinities and compositions, making them applicable in a wide range of fields, including composite materials, catalytic materials, ceramic materials, refractory materials, advanced electronic materials, battery materials, chromogenic materials, wave-absorbing materials, wastewater degradation materials, antibacterial materials, coatings, pigments, thermal spray materials, and sensors.

## BRIEF DESCRIPTION OF THE DRAWINGS

Figure 1: XRD pattern of the low crystallinity nano niobium oxide prepared in Example 1.
Figure 2: TEM morphology and diffraction pattern of the low crystallinity nano niobium oxide prepared in Example 1.
Figure 3: TEM morphology and diffraction pattern of the crystalline nano niobium oxide obtained after moderate heat treatment in Example 1.
Figure 4: TEM morphology and diffraction pattern of the crystalline nano niobium oxide obtained after high-temperature heat treatment in Example 1.
Figure 5: Low magnification TEM image of the partially crystalline nano vanadium oxide prepared in Example 2.
Figure 6: High magnification TEM image and diffraction pattern of the partially crystalline nano vanadium oxide prepared in Example 2.
Figure 7: Low magnification TEM image of the nano vanadium oxide after moderate heat treatment in Example 2.
Figure 8: High magnification TEM image and diffraction pattern of the nano vanadium oxide after moderate heat treatment in Example 2.
Figure 9: High magnification TEM image and diffraction pattern of the crystalline nano vanadium oxide obtained after high-temperature heat treatment in Example 2.
Figure 10: Low magnification TEM image and diffraction pattern of the low crystallinity nano chromium oxide prepared in Example 3.
Figure 11: High magnification TEM image of the low crystallinity nano chromium oxide prepared in Example 3.
Figure 12: Low magnification TEM image and diffraction pattern of the crystalline nano chromium oxide obtained after moderate heat treatment in Example 3.
Figure 13: High magnification TEM image of the crystalline nano chromium oxide obtained after moderate heat treatment in Example 3.
Figure 14: Low magnification TEM morphology and XRD pattern of the crystalline nano chromium oxide obtained after high-temperature heat treatment in Example 3.
Figure 15: High magnification TEM image of the crystalline nano chromium oxide obtained after high-temperature heat treatment in Example 3.
Figure 16: TEM morphology and diffraction pattern of the crystalline nano tantalum oxide prepared in Example 4.
Figure 17: High magnification TEM image of the crystalline nano tantalum oxide prepared in Example 4.
Figure 18: Low magnification TEM image and diffraction pattern of the low crystallinity nano tungsten oxide prepared in Example 5.
Figure 19: Low magnification TEM image and diffraction pattern of the crystalline nano tungsten oxide obtained in Example 5.
Figure 20: Low magnification TEM image and diffraction pattern of the nano manganese oxide prepared in Example 7.
Figure 21: SEM image of the crystalline nano manganese oxide obtained after moderate heat treatment in Example 8.
Figure 22: XRD pattern of the crystalline nano yttrium oxide prepared in Example 13.
Figure 23: XRD pattern of the crystalline nano gadolinium oxide prepared in Example 15.
Figure 24: TEM morphology and diffraction pattern of the crystalline nano gadolinium oxide prepared in Example 15.
Figure 25: SEM image of the low crystallinity nano chromium oxide prepared in Example 16.
Figure 26: SEM image of the product obtained in Comparative Example 1.

## DETAILED DESCRIPTION

The following specific examples will further illustrate the technical solution described herein:

**Example 1:**

This example provides a method for preparing nanostructured niobium oxide, comprising the following steps:
According to the nominal composition of $Al7_5Nb_{25}$ (atomic percentage), a low-purity aluminum raw material containing impurities such as O and Si is melted with a niobium (Nb) raw material. The resulting alloy has a composition mainly of $Nb_{25}Al_{74.5}O_{0.15}Si_{0.35}$. This alloy melt is then rapidly solidified into an initial alloy ribbon with a thickness of $20\mu m$ to $30\mu m$ by using a melt spinning method with a copper roller. The average composition of the alloy ribbon is $Nb_{25}Al_{74.5}O_{0.15}Si_{0.35}$. The solidified microstructure mainly consists of $NbAl_3$ intermetallic compounds. (The nominal composition refers to an approximate composition or formula without considering impurities, and the actual composition of the melt may slightly differ from this after melting. The term nanostructured niobium oxide is equivalent to nanostructured Nb oxide.)

At atmospheric pressure, 0.5 g of the $Nb_{25}Al_{74.5}O_{0.15}Si_{0.35}$ initial alloy ribbon is reacted with 50 mL of NaOH solution under constant stirring. The NaOH solution has a concentration of 10 mol/L and is heated to its boiling point (~119°C) at atmospheric pressure. Within 1 minute, the hydrogen evolution and Al-removal reaction is completed, and the initial alloy ribbon undergoes nano fragmentation through the hydrogen evolution and Al-removal reaction, while also undergoing shape and composition reconstruction to generate nanoscale solid products;

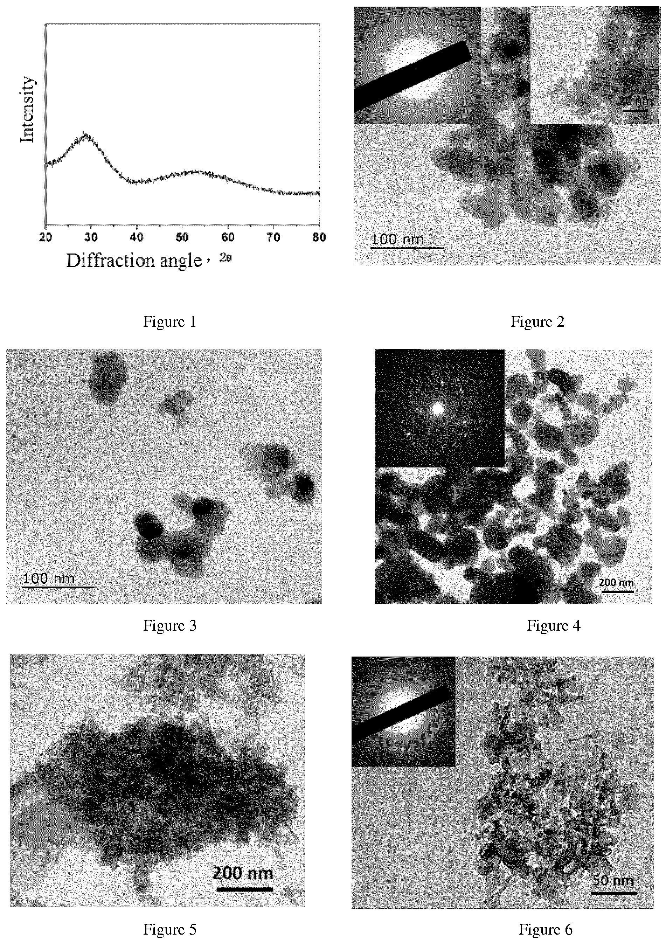

After 1 minute of hydrogen evolution and Al-removal reaction, 500 mL of water at 20°C is added into the reaction system to dilute the NaOH solution to below 1 mol/L and reduce the temperature to below 40°C. The solid product is then separated from the diluted alkali solution. The product is further washed with 0.01 mol/L dilute hydrochloric acid solution to neutralize the residual alkali adsorbed on the solid product. After separation and drying, a powder mainly consisting of low-crystallinity nanostructured niobium oxide (or niobium hydroxide) is obtained. Its X-ray diffraction (XRD) spectrum is shown in Figure 1, and its transmission electron microscope (TEM) morphology and diffraction pattern are shown in Figure 2. The TEM morphology reveals that the product consists of a large number of flocculent structures, with particle sizes ranging from 1 nm to 15 nm (see inset in Figure 2).

The low-crystallinity nanostructured niobium oxide obtained above is heat-treated at 600°C for 2 hours, resulting in nanostructured niobium oxide with particle sizes ranging from 3 nm to 150 nm and significantly improved crystallinity, but not fully crystallized. The TEM morphology of this product is shown in Figure 3.

The low-crystallinity nanostructured niobium oxide is then heat-treated at 900°C for 2 hours, resulting in crystalline niobium oxide with particle sizes ranging from 3 nm to 300 nm. The TEM morphology and diffraction pattern of the final product are shown in Figure 4. During the thermal treatment sintering process, some of the niobium oxide particles merged and grew larger. The crystalline niobium oxide after thermal treatment is further ball-milled to obtain dispersed nanostructured niobium oxide.

**Example 2:**

This example provides a method for preparing vanadium oxide nanoparticles, comprising the following steps:

According to the nominal composition of $Al_{75}V_{25}$ (atomic percentage), low-purity aluminum raw material containing impurities such as O and Si is melted with vanadium (V) to obtain an alloy melt with the composition of $V_{24.9}Al_{74.6}O_{0.2}Si_{0.3}$. The alloy is cast into ingots with a composition of $V_{24.9}Al_{74.6}O_{0.2}Si_{0.3}$, which mainly consists of the $VAl_3$ intermetallic compound phase. The ingots are then mechanically crushed into an initial alloy powder with an average particle size not exceeding 50 μm.

At atmospheric pressure, 0.5 g of the $V_{24.9}Al_{74.6}O_{0.2}Si_{0.3}$ initial alloy powder is reacted with 50 mL of NaOH solution under continuous stirring. The NaOH solution is prepared with a concentration of 12 mol/L, and the temperature is maintained at its boiling point (approximately 128°C at atmospheric pressure). Within 1 minute, the hydrogen evolution and Al-removal reaction is completed, and the initial alloy undergoes nano fragmentation through the hydrogen evolution and Al-removal reaction, while also undergoing shape and composition reconstruction to generate nanoscale solid products;

After 2 minutes of reaction, the solid product in the reaction system is separated from the alkaline solution using a multi-layer metal filter, and the solid product is cooled to below 40°C. The solid product is then washed with 0.02 mol/L dilute hydrochloric acid solution to neutralize any residual alkali adsorbed on the solid product. After separation and drying, nano vanadium oxide powder with minimal crystallization is obtained. The obtained vanadium oxide powder mainly consists of flocculent and thin-film structures, with the thickness of the films ranging from 2 nm to 15 nm and an average area greater than 200 $nm^2$. The particle size range of the flocculent structure is from 1 nm to 15 nm. The TEM morphology and diffraction pattern of the product are shown in Figures 5 and 6, with the TEM image showing the characteristic flocculent structures.

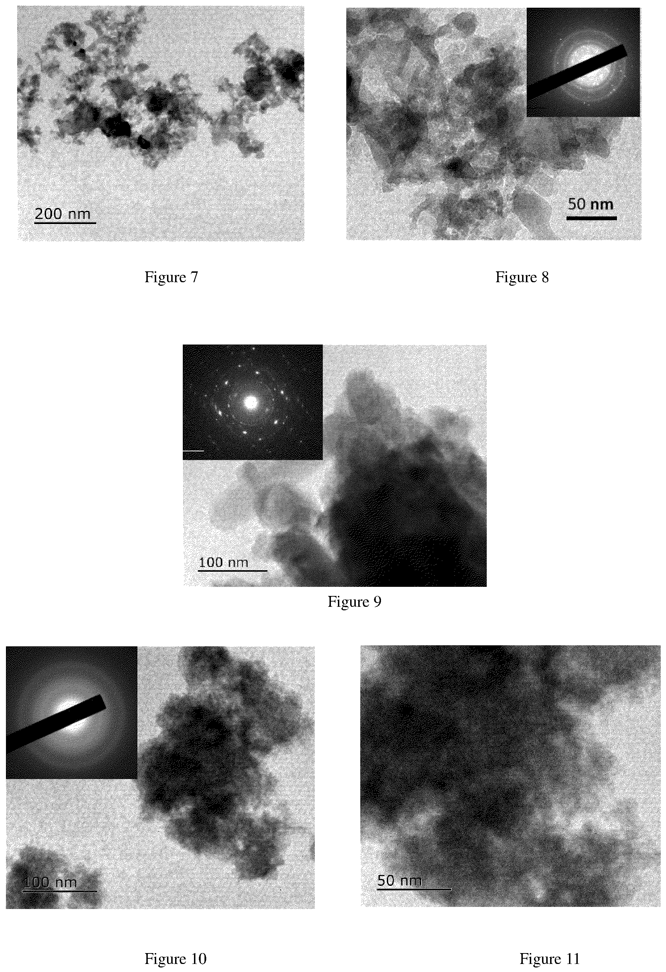

The as-prepared nano vanadium oxide powder with minimal crystallization is heat-treated at 600°C for 2 hours, resulting in the formation of predominantly crystalline vanadium oxide. The shapes of the particles mainly consist of thickened films and granular structures, with the thickness of the films ranging from 3 nm to 25 nm and an average area greater than 200 $nm^2$. The particle size range of the granular structures is from 5 nm to 50 nm. The TEM morphology and diffraction pattern of the heat-treated product are shown in Figures 7 and 8.

The as-prepared nano vanadium oxide powder with minimal crystallization is further heat-treated at 900°C for 2 hours to obtain crystalline vanadium oxide. The shapes of the particles mainly consist of short rod-like structures, with the diameter of the rods ranging from 10 nm to 100 nm. The TEM morphology and diffraction pattern of the final product are shown in Figure 9.

**Example 3:**

This example provides a method for preparing nanostructured chromium oxide, comprising the following steps:

According to the nominal composition of $Al_{80}Cr_{20}$ (atomic percentage), low-purity aluminum raw material containing impurities such as O and Si is melted with chromium (Cr) to obtain an alloy melt with the composition of $Cr_{20}Al_{79.5}O_{0.1}Si_{0.4}$. The alloy is then solidified into ingots, which are crushed into initial alloy powder with an average particle size of 100 $\mu$m and a composition of $Cr_{20}Al_{79.5}O_{0.1}Si_{0.4}$. The solidified microstructure mainly consists of the $CrAl_4$ intermetallic compound phase.

At atmospheric pressure, 0.5 g of the $Cr_{20}Al_{79.5}O_{0.1}Si_{0.4}$ initial alloy powder is reacted with NaOH solution under continuous stirring. The NaOH solution has a concentration of 12 mol/L, and its volume is approximately 100 times the volume of the initial alloy powder. The temperature is maintained at its boiling point of the NaOH solution (~128°C). Within 1.5 minutes, the hydrogen evolution and Al-removal reaction is completed, and the $Cr_{20}Al_{79.5}O_{0.1}Si_{0.4}$ initial alloy undergoes nano fragmentation through the hydrogen evolution and Al-removal reaction, while also undergoing shape and composition reconstruction to generate nanoscale solid flocculent products;

After 2 minutes of reaction, water (with a temperature of 20°C and a volume of 10 times the volume of the reaction mixture) is added to the reaction system, which reduces the alkali solution concentration to below 1.2 mol/L and lowers the temperature of the alkali solution to below 40°C. The resulting solid flocculent product is separated from the diluted alkali solution and washed with a 0.01 mol/L dilute hydrochloric acid solution to neutralize any residual alkali. After separation and drying, low-crystallinity nanostructured chromium oxide powder is obtained. The composition is mainly amorphous chromium oxide ($Cr_2O_3$) or amorphous chromium hydroxide ($Cr(OH)_3$). The TEM morphology and diffraction pattern are shown in Figures 10 and 11, indicating the product consists of extremely fine flocculent microstructures with particle sizes ranging from 1.0 nm to 15 nm. This flocculent structure is not a rigid nanoporous structure but a loosely distributed structure that can be flattened and dispersed.

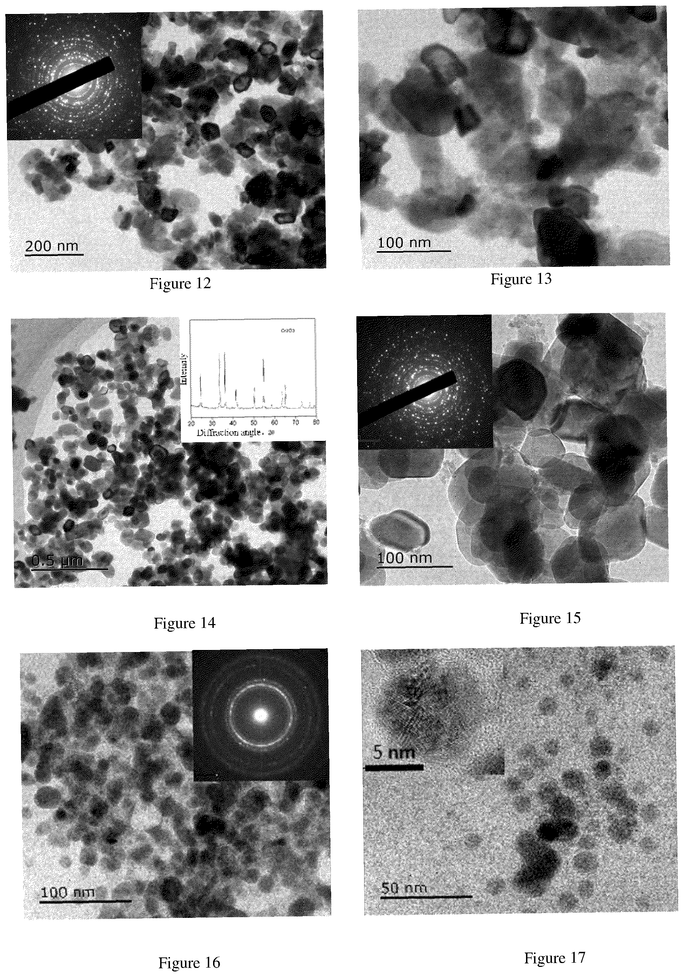

After 2 minutes of hydrogen evolution and Al-removal reaction, the collected powder, which is mainly composed of low-crystallinity nanostructured chromium oxide, is heat-treated at 600°C for 2 hours. The resulting crystalline nanostructured chromium oxide has particles with sizes ranging from 3 nm to 100 nm. The TEM morphology and diffraction pattern of this treated product are shown in Figures 12 and 13. After medium-temperature heat treatment, the particles exhibit good dispersion.

After 2 minutes of hydrogen evolution and Al-removal reaction, the collected powder, which is mainly composed of low-crystallinity nanostructured chromium oxide is heat-treated at 900°C for 2 hours. The resulting crystalline nanostructured chromium oxide particles have sizes ranging from 3 nm to 150 nm. The TEM morphology, XRD spectrum, and diffraction pattern of the heat-treated product are shown in Figures 14 and 15. Even after high-temperature crystallization, the nanostructured chromium oxide particles exhibit some sintering and agglomeration. However, they still maintain excellent dispersion or looseness. The sintered structure resembles a nano porous, loose structure. This good dispersion and looseness make it possible to further break and refine the material into ultra-fine spherical or near-spherical chromium oxide nanoparticles using post-processing techniques such as sand milling or ball milling. This is in contrast to most conventional methods for preparing commercial nanostructured chromium oxide, which typically result in large, solid agglomerated particles that do not have a nanoporous or loose powder structure, making them difficult to refine into ultra-fine nanoparticles.

After 1 minute of the hydrogen evolution and Al-removal reaction, the alkali solution and solid product are directly transferred into a sealed reaction vessel. The temperature inside the vessel is raised to 250°C and maintained for 20 minutes, causing the pressure inside the vessel to exceed atmospheric pressure. After 20 minutes of insulation, the temperature and pressure of the reaction vessel were lowered, and the products in the reaction vessel were subjected to solid-liquid separation. After cleaning and drying, the modified nanostructured chromium oxide with significantly improved crystallization degree is obtained. The morphology of the product is mainly granular, with a particle size range of 3nm-100nm.

The low-crystallinity, crystalline, and modified nanostructured chromium oxide powders obtained through this process can be applied in a wide range of fields, including pigments, coatings, ceramic materials, refractory materials, electronic materials, and composite materials.

**Example 4:**

This example provides a method for preparing nanostructured tantalum oxide, comprising the following steps:

According to the nominal composition of $Al_{75}Ta_{25}$ (atomic percentage), low-purity aluminum raw material containing impurities such as O and Si is melted with tantalum (Ta) to obtain an alloy melt with the composition of $Ta_{24.5}Al_{74.5}O_{0.5}Si_{0.5}$ (atomic percentage). The alloy melt is then rapidly solidified into an initial alloy ribbon with a thickness of ~25 $\mu$m by using a melt spinning method with a copper roller; the composition of the initial alloy ribbon is $Ta_{24.5}Al_{74.5}O_{0.5}Si_{0.5}$. The microstructure of initial alloy ribbon mainly consists of the $TaAl_3$ intermetallic compound phase.

At atmospheric pressure, 0.5 g of the $Ta_{24.5}Al_{74.5}O_{0.5}Si_{0.5}$ initial alloy ribbon is reacted with 50 mL of NaOH solution under continuous stirring. The NaOH solution has a concentration of 12 mol/L, and its temperature is maintained at its boiling point (~128°C). Within 100 seconds, the hydrogen evolution and Al-removal reaction is completed, and the initial alloy undergoes nano fragmentation through the hydrogen evolution and Al-removal reaction, while also undergoing shape and composition reconstruction to generate nanoscale solid products containing Ta.

After 2 minutes of reaction, the solid product is separated from the solution. The product is washed, and then dried to obtain a solid powder containing Ta. The composition of the powder is crystalline nanostructured tantalum oxide ($Ta_2O_5$). The TEM morphology and diffraction pattern are shown in Figures 16 and 17. The product exhibits excellent particle dispersion, with particle sizes ranging from 3 nm to 100 nm.

**Example 5:**

This example provides a method for preparing nanostructured tungsten oxide, comprising the following steps:
According to the nominal composition of $Al_{80}W_{20}$ (atomic percentage), low-purity aluminum raw material containing impurities such as O and Si is melted with tungsten (W) to obtain an alloy melt with the composition of $W_{20}Al_{79.5}Si_{0.5}$ (atomic percentage). The alloy melt is then solidified into ingots, which are subsequently crushed to form initial alloy powders with an average particle size of 50 $\mu$m. The initial alloy mainly consists of $WAl_4$ intermetallic compound.

At atmospheric pressure, the $W_{20}Al_{79.5}Si_{0.5}$ initial alloy powder (0.5 g) is reacted with 50 mL of NaOH solution under continuous stirring. The NaOH solution has a concentration of 10 mol/L, and its temperature is maintained at its boiling point (~119°C). The volume of the NaOH solution is approximately 100 times the volume of the initial alloy powder. Within 1 minute, the hydrogen evolution and Al-removal reaction is completed, and the initial alloy undergoes nano fragmentation through the hydrogen evolution and Al-removal reaction, while also undergoing shape and composition reconstruction to generate nanoscale solid products containing W.

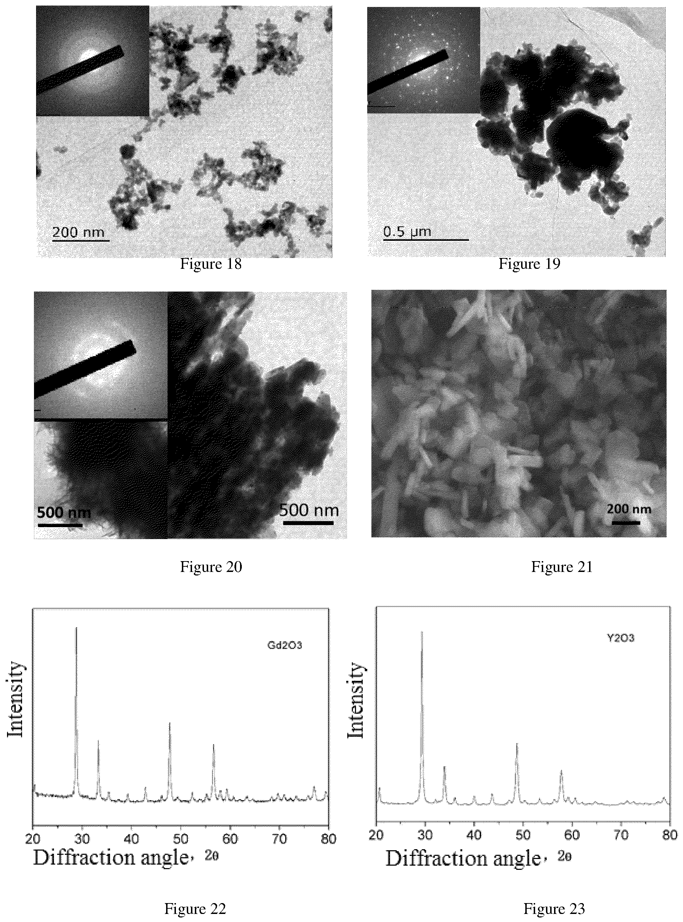

After 2 minutes of reaction, the solid product is separated from the solution. The product is washed and then dried, resulting in low-crystallinity nanostructured tungsten oxide particles. The TEM morphology and diffraction pattern are shown in Figure 18, with particle sizes ranging from 3 nm to 100 nm.

The as-prepared low-crystallinity nanostructured tungsten oxide is heat-treated at 600°C for 2 hours, resulting in crystalline nanostructured tungsten oxide particles with a particle size range of 10 nm to 400 nm. The TEM morphology and diffraction pattern after heat treatment are shown in Figure 19. During the sintering process, some of the tungsten oxide particles merged and grew larger. After heat treatment, the crystalline nanostructured tungsten oxide is subjected to sand milling, which results in well-dispersed nanostructured tungsten oxide particles.

**Example 6:**

This example provides a method for preparing nanostructured molybdenum oxide, comprising the following steps:
According to the nominal composition of $Al_{77}Mo_{23}$ (atomic percentage), commercial aluminum (Al) raw material is melted with molybdenum (Mo) raw material, which contains oxygen impurities, to obtain an alloy melt with a composition of $Mo_{23}Al_{79.95}O_{0.05}$ (atomic percentage). The alloy melt is then rapidly solidified into an initial alloy ribbon with a thickness of ~25$\mu$m by using a melt spinning method with a copper roller; the composition of the initial alloy ribbon is $Mo_{23}Al_{79.95}O_{0.05}$. The solidified structure of the alloy mainly consists of $MoAl_4$ and $Mo_3Al_8$ intermetallic compounds.

At atmospheric pressure, the $Mo_{23}Al_{79.95}O_{0.05}$ initial alloy ribbon is reacted with a 15 mol/L KOH solution under continuous stirring. The temperature is maintained at the boiling point of the KOH solution (~150°C). The volume of KOH solution is approximately 50 times the volume of the initial alloy ribbon. Within 1 minute, the hydrogen evolution and Al-removal reaction is completed, and the initial alloy undergoes nano fragmentation through the hydrogen evolution and Al-removal reaction, while also undergoing shape and composition reconstruction to generate nanoscale solid flocculent product.

After 2 minutes of reaction, the solid flocculent product is separated from the solution. The product is then washed with a 0.02 mol/L dilute hydrochloric acid solution to neutralize and remove any residual alkali adsorbed onto the solid product. The product is then separated, dried, and results in low-crystallinity nanostructured molybdenum oxide powder. The composition of the powder consists of amorphous nanostructured molybdenum oxide or amorphous molybdenum hydroxide. The morphology of the powder mainly consists of very fine flocculent microstructures, with a particle size range of 1.0 nm to 10 nm.

The low-crystallinity nanostructured molybdenum oxide powder is heat-treated at 600°C for 2 hours. This process results in crystalline molybdenum oxide particles with a particle size range of 3 nm to 100 nm.

**Example 7:**

This example provides a method for preparing nanostructured manganese oxide, comprising the following steps:
According to the nominal composition of $Al_{73.3}Mn_{26.7}$ (atomic percentage), Aluminum (Al) raw material is melted with manganese (Mn) raw material to obtain an alloy melt with a composition of $Al_{73.3}Mn_{26.7}$. The alloy melt is then rapidly solidified into an initial alloy ribbon with a thickness of ~25$\mu$m by using a melt spinning method with a copper roller; the composition of the initial alloy ribbon is $Al_{73.3}Mn_{26.7}$. The solidified structure of the alloy mainly consists of $Al_{11}Mn_4$ intermetallic compound.

At atmospheric pressure, the $Al_{73.3}Mn_{26.7}$ initial alloy ribbon is reacted with a 12 mol/L NaOH solution under continuous stirring. The temperature is maintained at the boiling point of the NaOH solution(~128°C). The volume of NaOH solution is approximately 75 times the volume of the initial alloy ribbon. Within 1 minute, the hydrogen evolution and Al-removal reaction is completed, and the $Al_{73.3}Mn_{26.7}$ initial alloy undergoes nano fragmentation through the hydrogen evolution and Al-removal reaction, while also undergoing shape and composition reconstruction to generate nanoscale solid products.

After 2 minutes of reaction, the solid product is separated from the solution. The product is then washed, separated, and dried, resulting in partially crystallized nanostructured manganese oxide (as shown the diffraction pattern in the upper left corner of Figure 20). The morphology of the powder mainly consists of flake-like particles (as shown in Figure 20), and also includes some thin-film structures (as shown in Figure 20, lower left inset). The thickness of the flake-like particles ranges from 3 nm to 150 nm, and the flake diameter ranges from 5 nm to 500 nm. The thickness of the thin-film structures ranges from 1 nm to 20 nm, with an average area greater than 100 $nm^2$.

**Example 8:**

This example provides a method for preparing nanostructured manganese oxide, comprising the following steps:
According to the nominal composition of $Al_{73.3}Mn_{26.7}$ (atomic percentage), commercial Aluminum (Al) raw material of with Si impurity is melted with manganese (Mn) raw material to obtain an alloy melt with a composition of $Al_{73.3}Mn_{26.5}Si_{0.2}$ (atomic percentage). The alloy melt is then rapidly solidified into an initial alloy ribbon with a thickness of ~25 $\mu$m by using a melt spinning method with a copper roller; the composition of the initial alloy ribbon is $Al_{73.3}Mn_{26.7}$. The solidified structure of the alloy mainly consists of $Al_{11}Mn_4$ intermetallic compound.

At atmospheric pressure, the $Al_{73.3}Mn_{26.5}Si_{0.2}$ initial alloy ribbon is reacted with a 10 mol/L NaOH solution under continuous stirring. The temperature is maintained between 105°C and 115°C, and the volume of NaOH solution is approximately 75 times the volume of the initial alloy ribbon. Within 1 minute, the hydrogen evolution and Al-removal reaction is completed, and the $Al_{73.3}Mn_{26.5}Si_{0.2}$ initial alloy undergoes nano fragmentation through the hydrogen evolution and Al-removal reaction, while also undergoing shape and composition reconstruction to generate nanoscale solid flocculent product.

The reaction is maintained under these conditions for 2 hours, with water being added to maintain the concentration of the alkaline solution. During this period, the solid product generated from the hydrogen evolution and Al-removal reaction further undergoes morphological changes under the original reaction temperature and environment. The solid product is separated from the solution, washed, and dried, resulting in partially crystallized nanostructured manganese oxide. The morphology of the powder mainly consists of plate-like particles, with the thickness of the plates ranging from 3 nm to 75 nm and the plate diameter ranging from 3 nm to 300 nm.

The partially crystallized nanostructured manganese oxide is then heat-treated at 600°C for 2 hours. The result is manganese oxide that is almost fully crystallized, with a change in the oxidation state of Mn from low to high. The SEM morphology of the heat-treated nanostructured manganese oxide is shown in Figure 21. The shape of the nanostructured manganese oxide particles is mainly plate-like, with some hexagonal plate-shaped particles. The thickness of the plates ranges from 3 nm to 150 nm, and the plate diameter ranges from 5 nm to 500 nm.

**Example 9:**

This example provides a method for preparing nanostructured vanadium oxide, comprising the following steps:
According to the nominal composition of $Zn_{75}V_{25}$ (atomic percentage), the alloy is melted to obtain an alloy melt with a composition primarily of $Zn_{75}V_{25}$. The melt alloy is then solidified into an alloy ingot, which is subsequently crushed into initial alloy powder with an average particle size of 50 $\mu$m. The solidified structure of the alloy mainly consists of $VZn_3$ intermetallic compound.

Under atmospheric pressure, 0.25 g of the $Zn_{75}V_{25}$ initial alloy powder is reacted with 50 mL of a NaOH solution under continuous stirring. The concentration of the NaOH solution is 15 mol/L, and the temperature is maintained at the boiling point of the solution (~140°C). Within 1 minute, the hydrogen evolution and Zn-removal reaction is completed, and the initial alloy undergoes nano fragmentation through the hydrogen evolution and Zn-removal reaction, while also undergoing shape and composition reconstruction to generate nanoscale solid flocculent product.

After 10 minutes of reaction, the resulting solid flocculent product is separated from the solution, washed, and dried. This yields low degree crystalline nano vanadium oxide powder. The powder mainly consists of flocculent structures, with the size of the flocculent microstructures ranging from 1.0 nm to 15 nm.

**Example 10:**

This example provides a method for preparing nanostructured chromium oxide, comprising the following steps:
According to the nominal composition of $Al_{61}Cr_{39}$ (atomic percentage), commercial Al and Cr raw material are melted to obtain an alloy melt with a composition primarily of $Al_{60.7}Cr_{39}O_{0.1}Si_{0.2}$. The melt is then solidified into an alloy ingot, which is subsequently crushed into initial alloy coarse powder with an average particle size of approximately 2 mm. The solidified structure of the alloy consists

mainly of $Al_8Cr_5$ intermetallic compound.

Under atmospheric pressure, the $Al_{60.7}Cr_{39}O_{0.1}Si_{0.2}$ initial alloy coarse powder is reacted with an NaOH aqueous solution under continuous stirring. The concentration of the NaOH solution is 12 mol/L, and the temperature is maintained at the boiling point of the solution (~128°C). The volume of NaOH solution is approximately 50 times the volume of the initial alloy coarse powder.

Within 8 minutes, the hydrogen evolution and Al-removal reaction is completed. This causes the initial alloy coarse powder to undergo nano fragmentation, and simultaneously, its shape and composition are restructured into nanoscale solid products in the form of a flocculent structure.

After 10 minutes, the solid flocculent product is separated from the solution, washed, and dried, yielding a low crystallinity nanostructured chromium oxide powder. The powder mainly consists of flocculent microstructures, with particle sizes ranging from 1.0 nm to 15 nm.

The low crystallinity nanostructured chromium oxide powder is heat-treated at 600°C for 2 hours. This treatment results in crystallized nanostructured chromium oxide particles with particle sizes ranging from 3 nm to 100 nm.

The same low crystallinity nanostructured chromium oxide powder is then heat-treated at 900°C for 2 hours. This produces crystallized chromium oxide particles with particle sizes ranging from 3 nm to 150 nm.

The $Al_{60.7}Cr_{39}O_{0.1}Si_{0.2}$ initial alloy coarse powder is mixed with 12 mol/L NaOH aqueous solution (50 times the volume of the alloy powder) and placed in a high-pressure reactor. The reactor is then sealed, and the temperature is raised to 250°C, where it is maintained for 20 minutes. In this sealed environment, the pressure inside the reactor is higher than atmospheric pressure. After 20 minutes of heating, the pressure and temperature are reduced, and the modified solid product is collected. The product is then washed and dried, yielding modified nanostructured chromium oxide. The morphology of the modified chromium oxide is primarily composed of tubular and rod-shaped particles, with the rod diameter ranging from 2 nm to 10 nm, and a length-to-diameter ratio greater than 2. The particle size of the modified product ranges from 2 nm to 100 nm.

These low crystallinity, crystalline, and modified nanostructured chromium oxide materials have excellent potential for applications in fields such as pigments, coatings, ceramics, refractory materials, electronic materials, and composite materials..

**Example 11:**

This example provides a method for modifying nanostructured vanadium oxide, comprising the following steps:

According to the nominal composition of $Al_{75}V_{25}$ (atomic percentage), low-purity aluminum (Al) raw material of with O and Si impurity is melted with vanadium (V) raw material to obtain an alloy melt with a composition primarily of $V_{24.9}Al_{74.6}O_{0.2}Si_{0.3}$. The melt is then cast into an alloy ingot. The ingot mainly consists of the $VAl_3$ intermetallic compound. The alloy ingot is subsequently mechanically broken down into initial alloy powder with an average particle size not exceeding 50 μm.

Under atmospheric pressure, 0.5 g of the as-prepared $V_{24.9}Al_{74.6}O_{0.2}Si_{0.3}$ initial alloy powder is mixed with 50 mL of NaOH solution. The NaOH solution has a concentration of 12 mol/L, and the temperature is maintained at the boiling point of the solution (~128°C). After 1 minute, the solid product and the reaction solution are transferred to a high-pressure reactor, which is then sealed. The reactor, containing the solid product and NaOH solution, is heated to 300°C and maintained at this temperature for 10 minutes. In this sealed environment, the pressure inside the reactor is higher than atmospheric pressure. After 10 minutes of heating, the pressure and temperature inside the reactor are reduced. The modified solid product is collected, washed, and dried. This yields modified nanostructured vanadium oxide ($V_2O_5$), which is mainly crystalline. The morphology of the modified product consists primarily of short rod-shaped and particle-shaped structures. The diameter of the short rods ranges from 2 nm to 30 nm, and the particle size ranges from 5 nm to 200 nm.

**Example 12:**

This example provides a method for preparing nanostructured niobium oxide, comprising the following steps:

According to the nominal composition of $Al_{75}Nb_{25}$ (atomic percentage), the alloy is melted using commercially available Al and Nb raw materials, which may contain impurities such as O and Si. The resulting alloy melt has a composition primarily of $Nb_{25}Al_{74.7}O_{0.1}Si_{0.2}$. The alloy melt is then rapidly solidified into a $Nb_{25}Al_{74.7}O_{0.1}Si_{0.2}$ initial alloy ribbon with a thickness of ~25μm by using a melt spinning method with a copper roller; This alloy ribbon primarily consists of the $NbAl_3$ intermetallic compound.

Under atmospheric pressure, 0.5 g of the prepared $Nb_{25}Al_{74.7}O_{0.1}Si_{0.2}$ initial alloy ribbon is mixed with 50 mL of NaOH solution. The NaOH solution has a concentration of 12 mol/L, and the temperature is maintained at 60°C. The reaction proceeds for 7 minutes, during which the aluminum (Al) is removed by a hydrogen evolution reaction, causing the alloy to undergo nano fragmentation and simultaneous restructuring of the shape and composition, resulting in a nanoscale solid product.

After 8 minutes of reaction, the solid product and the NaOH solution are transferred to a high-pressure reactor, which is sealed. The reactor, containing the solid product and NaOH solution, is heated to 200°C and maintained at this temperature for 1 hour. During this process, the pressure inside the reactor is higher than atmospheric pressure due to the sealed environment. After 1 hour of heating, the pressure and temperature inside the reactor are reduced. The modified solid product is collected, washed, and dried. The resulting nanostructured niobium oxide is predominantly crystalline. The morphology of the final product consists mainly of short rod-like and particle-like structures. The diameter of the short rods ranges from 2 nm to 10 nm, and the particle size ranges from 2 nm to 75 nm.

**Example 13:**

This example outlines the preparation of nanostructured yttrium oxide, comprising the following steps: According to the nominal composition of $Al_{50}Y_{50}$ (atomic percentage), the alloy is produced by melting commercially available Al and yttrium (Y) raw materials, which may contain oxygen impurities. The resulting alloy melt has a primarily composition of $Y_{50}A_{149.5}O_{0.5}$. The melt is then rapidly cooled using a copper roller to form a thin, solidified alloy sheet with a thickness of approximately 200 $\mu$m. The solidified sheet primarily consists of the YAl intermetallic compound.

Under atmospheric pressure, 0.5 g of the $Y_{50}A_{149.5}O_{0.5}$ initial alloy sheet is mixed with 50 mL of NaOH solution. The NaOH solution has a concentration of 10 mol/L, and the temperature is maintained at the boiling point (approximately 119°C) under normal atmospheric pressure. The hydrogen evolution and Al-removal reaction is completed within 2 minutes, leading to the nano fragmentation of the initial alloy sheet. During this process, the shape and composition of the material undergo reconstruction, resulting in the formation of a nanoscale solid product containing yttrium.

After 3 minutes, the resulting solid product containing yttrium is separated from the NaOH solution. The solid product is then washed and dried, resulting in the formation of nanostructured yttrium oxide powder. The powder is predominantly crystalline in nature. The shape of the final nanostructured yttrium oxide powder is mostly particulate, and the particle size ranges from 3 nm to 350 nm. The X-ray diffraction (XRD) pattern of the powder, shown in Figure 22, confirms its crystalline structure.

**Example 14:**

This example describes the preparation of nanostructured yttrium oxide using a specific alloy composition, comprising the following steps: According to the nominal composition of $Al_{37.5}Zn_{37.5}Y_{25}$ (atomic percentage), the alloy is produced by melting commercially available raw materials of Al, Zn, and Y (which may contain oxygen impurities). The resulting alloy has a primarily composition of $Al_{37.5}Zn_{37.2}Y_{24.8}O_{0.5}$. This molten alloy is rapidly solidified using a copper roller, forming thin alloy ribbons approximately 25 $\mu$m in thickness. The solidified structure is primarily composed of $YAl_3$ and $YZn_3$ intermetallic compounds.

The initial alloy ribbon ($Al_{37.5}Zn_{37.2}Y_{24.8}O_{0.5}$) is placed into a reaction vessel with a mixed NaOH and KOH aqueous solution. The concentration of $OH^-$ in the solution is 7 mol/L, and the temperature is maintained at 110°C to 115°C. The volume of the solution is about 50 times the volume of the alloy ribbon. The de-aluminization and de-zincification reactions, together with hydrogen evolution reactions, occur within 2 minutes. These reactions cause the alloy to undergo nano fragmentation and simultaneous shape and compositional reconstruction, resulting in the formation of nanoscale solid products containing yttrium.

After 5 minutes, the solid product containing yttrium is separated from the alkaline solution. The solid product is washed, separated, and dried, yielding nanostructured yttrium oxide powder. The nanostructured yttrium oxide powder consists of predominantly crystalline particles and short rod-like particles, with particle sizes ranging from 5 nm to 300 nm. The aspect ratio (length-to-diameter ratio) of the rod-like particles ranges from 1:1 to 5:1.

**Example 15:**

This example outlines the process for preparing nanostructured gadolinium oxide, comprising the following steps: According to the nominal composition of $A_{67}Gd_{33}$ (atomic percentage), the alloy is produced by melting commercially available raw materials of Al, Zn, and gadolinium (Gd) containing oxygen impurities. The resulting alloy composition is primarily $Al_{67}Gd_{32.3}O_{0.5}Si_{0.2}$. The alloy is then rapidly solidified using a copper roller, forming thin ribbons approximately 25 $\mu$m in thickness. The solidified structure is primarily composed of the $GdAl_2$ intermetallic compound.

The initial alloy ribbons ($Al_{67}Gd_{32.3}O_{0.5}Si_{0.2}$) are then mixed with a NaOH solution. The NaOH solution has a concentration of 10 mol/L, and the temperature is maintained at the boiling point (around 119°C). The reaction occurs under normal atmospheric pressure, and within 1 minute, the hydrogen evolution and Al-removal reaction completes. This leads to the fragmentation of the alloy into nanoparticles, with shape and composition reconstruction, producing nanoscale gadolinium-containing solid products.

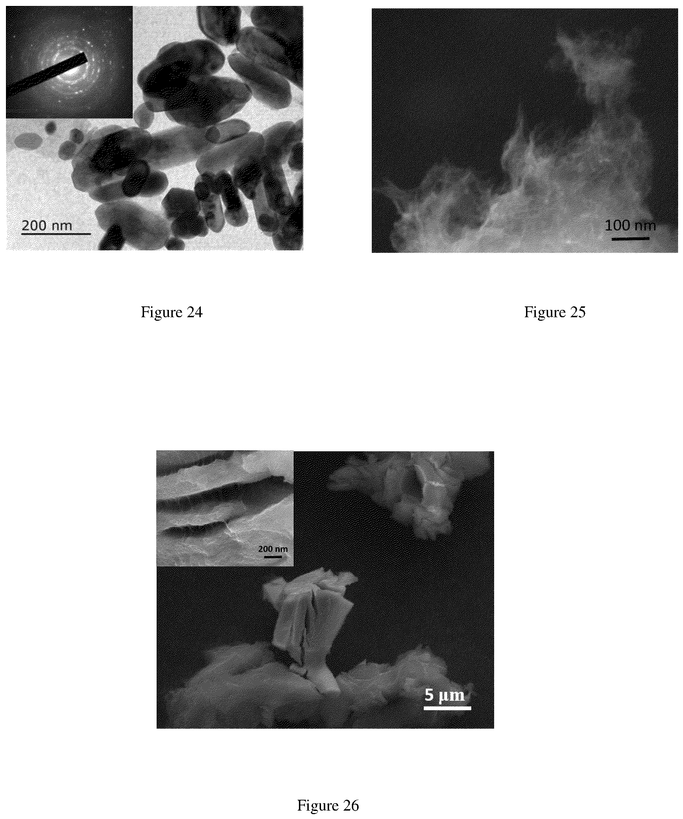

After 2 minutes, the solid products containing gadolinium are separated from the alkaline solution. The solid product is washed, separated, and dried to yield nanostructured gadolinium oxide powder. The obtained gadolinium oxide powder is primarily crystalline, with particle shapes consisting of both particles and short rod-like structures. The particle sizes range from 5 nm to 300 nm. The rod-like particles have an aspect ratio (length-to-diameter ratio) ranging from 1:1 to 5:1. The X-ray diffraction (XRD) pattern of the powder is shown in Figure 23, and the TEM morphology and diffraction pattern are shown in Figure 24.

**Example 16:**

This example presents a method for preparing nanostructured chromium oxide, comprising the following steps:
According to the nominal composition of $Al_{80}Cr_{20}$ (atomic percentage), the alloy is produced by melting commercially available raw materials of aluminum (Al) containing silicon (Si) impurity and chromium (Cr). The resulting alloy composition is primarily $Si_{0.25}Al_{80}Cr_{19.75}$. The molten alloy is then rapidly solidified using a copper roller, forming thin strips approximately 25 μm in thickness. The solidified structure of the alloy is primarily composed of $Al_4Cr$ intermetallic compounds.

The $Si_{0.25}Al_{80}Cr_{19.75}$ initial alloy ribbons are then subjected to reaction with a 15 mol/L NaOH solution at 60°C. The volume of the NaOH solution is approximately 100 times the volume of the initial alloy strips. Ultrasound treatment at a frequency of 40 kHz is applied to facilitate the reaction. Within 6 minutes, the hydrogen evolution and Al-removal reaction is completed, leading to the breakdown of the alloy into nanoparticles. At the same time, shape and composition reconstruction occurs, resulting in nanoscale solid products in the form of a fine flocculent structure.

After 8 minutes of the hydrogen evolution reaction, the solid flocculent products are separated from the alkaline solution. The solid product is then washed, separated, and dried to obtain low crystallinity nanostructured chromium oxide. The product is primarily in the amorphous form of nanostructured chromium oxide or amorphous chromium hydroxide. The obtained nanostructured chromium oxide has a morphology consisting mainly of very fine flocculent microstructures. The size range of the flocculent microstructures is from 1.0 nm to 15 nm, as shown in Figure 25. These extremely small and highly porous structures could provide unique surface properties suitable for catalytic, adsorptive, or electronic applications.

**Example 17:**

This example details the preparation of nanostructured chromium oxide, comprising the following steps:
According to the nominal composition of $Al_{80}Cr_{20}$ (atomic percentage), the alloy is prepared by melting commercially available aluminum (Al) containing silicon (Si) and chromium (Cr). The resulting alloy composition is primarily $Si_{0.25}Al_{80}Cr_{19.75}$. The molten alloy is then rapidly solidified into thin strips, approximately 25 μm thick, using a copper roller. The solidified structure is mainly composed of $Al_4Cr$ intermetallic compound.

Under atmospheric pressure, a 0.25 g of the $Si_{0.25}Al_{80}Cr_{19.75}$ initial alloy strip is placed into a reaction vessel along with 50 mL of NaOH solution at 30°C. The reaction is allowed to proceed slowly under atmosphere pressure, with hydrogen evolution occurring due to the Al-removal reaction.

After sealing the reaction vessel, the temperature is raised to 250°C and maintained for 20 minutes. In this closed environment, the pressure increases due to both the elevated temperature and the hydrogen gas produced during the reaction. This creates a high-pressure environment, which enhances the reaction process. After the 20-minute heat treatment, the reaction vessel is cooled and depressurized. The solid-liquid separation is performed, followed by washing and drying of the product to obtain modified nanostructured chromium oxide. The product primarily consists of crystalline chromium oxide, with a morphology made up of particle-like and short rod-like structures. The particle size ranges from 2 nm to 50 nm, and the rod-like structures have diameters between 2 nm and 30 nm, with aspect ratios ranging from 1:1 to 5:1.

It is evident that after sealing the reaction system, as the temperature of the reactor and its contents is raised from 30°C to 250°C, the hydrogen generation and T-removal reaction will be completely finished. The solid intermediate obtained at this stage will inevitably undergo changes in morphology and/or composition compared to the final product obtained after maintaining at 250°C for 20 minutes. This process is referred to as morphology and/or composition modification.

**Example** 18:

This example describes the preparation of nanostructured niobium (Nb) oxide / tantalum (Ta) oxide, comprising the following steps:
The alloy is prepared with a nominal composition of $Al_{75}Nb_{20}Ta_5$ (atomic percentage) by melting commercially available aluminum (Al), niobium (Nb), and tantalum (Ta). The resulting alloy composition is primarily $Al_{75}Nb_{20}Ta_5$. The molten alloy is then rapidly solidified into thin ribbons approximately 25 μm thick using a copper roller. The solidified alloy consists mainly of the intermetallic compound $Al_3Nb(Ta)$.

Under atmospheric pressure, the $Al_{75}Nb_{20}Ta_5$ initial alloy ribbons are placed in a NaOH solution (concentration of 10 mol/L) and stirred continuously. The reaction is carried out at 119°C (boiling point of NaOH solution under atmosphere pressure), with the solution volume being approximately 50 times the volume of the alloy ribbons. Within 1 minutes, the hydrogen evolution and Al-removal reaction is completed, and the initial alloy undergoes nano fragmentation through the hydrogen evolution and Al-removal reaction, while also undergoing shape and composition reconstruction to generate nanometer-scale solid products containing Nb and Ta.

After the reaction for 2 minutes, the solid Nb/Ta-containing product is separated from the alkaline solution. The solid product is washed thoroughly to remove excess NaOH, followed by drying to obtain a low-crystallinity nanostructured Nb/Ta oxide powder. The product predominantly consists of fine flocculent structures, with the size of these structures ranging from 1.0 nm to 15 nm.

The low-crystallinity nanostructured Nb/Ta oxide powder is subjected to heat treatment at 750°C for 2 hours. This step induces crystallization, and the resulting crystalline Nb/Ta oxide particles with a size range of 3 nm to 200 nm.

**Example 19:**

This example outlines a method for preparing nanostructured chromium oxide, comprising the following steps:

The initial alloy is prepared with a nominal composition of $Al_{80}Cr_{20}$ (atomic percentage) by melting commercially available aluminum (Al, including a small amount of Si) and chromium (Cr), where the alloy composition is mainly $Si_{0.25}Al_{80}Cr_{19.75}$. The molten alloy is then rapidly solidified using a copper roller to form thin ribbon of approximately 25 μm in thickness. The solidified alloy primarily consists of the intermetallic compound $Al_4Cr$.

Under atmosphere pressure, 0.5 g of the as-prepared $Si_{0.25}Al_{80}Cr_{19.75}$ initial alloy ribbon is placed in a sealed container with 50 mL of 10 mol/L NaOH aqueous solution. Initially, the alloy ribbon does not come into contact with the alkaline solution. The temperature inside the sealed container, as well as the temperature of the alloy ribbon and alkaline solution, is raised to 150°C, at which point the container is in a high-pressure state. The $Si_{0.25}Al_{80}Cr_{19.75}$ initial alloy ribbon is then mixed with the alkaline solution at this temperature, triggering a vigorous hydrogen evolution and aluminum removal reaction. During the high-temperature, high-pressure reaction, the initial alloy ribbon undergoes intense hydrogen evolution and aluminum removal, resulting in nanoparticle fragmentation. At the same time, the shape and composition of the material are restructured, forming solid flocculent products.

The hydrogen evolution and aluminum removal reaction is completed within 10 seconds. After 10 seconds, the sealed container and the reaction system are rapidly cooled by immersion in cooling water until the temperature reaches near room temperature, while the pressure inside the sealed container is reduced to atmospheric pressure.

Once the reaction system cools to room temperature and atmospheric pressure, the solid flocculent product is separated from the alkaline solution, followed by washing and drying. The result is low-crystallinity nano chromium oxide primarily in the amorphous state, or amorphous chromium hydroxide. The morphology of the nano chromium oxide consists mainly of extremely fine flocculent microstructures, with the size of these structures ranging from 1.0 nm to 15 nm.

**Comparative Example 1:**

According to the nominal composition of $Al_{75}Nb_{25}$ (atomic percent), a melt of the alloy with a composition of $Al_{74.5}Nb_{25}O_{0.3}Si_{0.2}$ was prepared by melting commercially available Al material with Si and O impurities with Nb material. The alloy melt was then cast into an $Al_{74.5}Nb_{25}O_{0.3}Si_{0.2}$ alloy ingot, which was mainly composed of the $NbAl_3$ intermetallic compound phase. This alloy ingot was further mechanically crushed into an initial alloy powder with an average particle size of approximately 25 μm.

At atmospheric pressure, the initial alloy powder was reacted with a 10 mol/L NaOH solution at 25°C for 2 hours (the average rate of advance of the reaction interface was less than 0.5 μm/min). The product obtained was mainly nanoporous Nb oxide or nano porous Nb, as shown in Figure 26. As can be seen, under these reaction conditions, the shape of the initial alloy powder before and after the reaction remained roughly unchanged. It was still in the form of fractured powder particles with sharp edges, and no significant nano fragmentation occurred. Additionally, there was no generation of a large number of dispersed nanoscale oxide powder particles. Instead, a coarse powder particle structure with retained sharp edges was formed, made up of nanoporous network structures. The particle size of the product remained similar to that of the initial alloy powder. Therefore, the reaction between the initial alloy and the alkaline solution at the lower temperature was completely different from the reaction under the higher temperature conditions, especially those near the boiling point, and the morphology of the products was also completely different.

The technical features of the examples described above can be combined in any way. For the sake of simplicity, not all possible combinations of technical features in the above examples have been described, but any combination that does not contradict the technical features should be considered within the scope of this disclosure.

The examples described above are only a few embodiments of the invention. They are described in detail, but this does not imply a limitation on the scope of the invention. It should be noted that those skilled in the art may make various modifications and improvements without departing from the inventive concept, and these are within the scope of the invention. Therefore, the scope of protection of this patent should be determined by the appended claims.

**Claims**

1. A preparation method for nano metal oxides, **characterized by** comprising the following steps:

   Step 1: Providing an initial alloy, wherein the initial alloy contains elements from M-class, T-class, and A-class; wherein the M-class elements include at least one of Cr, V, Nb, Ta, W, Mo, Mn, Y, La, Ce, Pr, Nd, Pm, Sm, Eu, Gd, Tb, Dy, Ho, Er, Tm, Yb, and Lu; the T-class elements include at least one of Al and Zn; the A-class elements include at least one of O, H, Na, K, Mg, Ca, Li, and Si; the composition of the initial alloy is primarily $A_xT_yM_z$, wherein x, y, and z represent the atomic percentage contents of the corresponding elements, and $0{\leq}x{\leq}15\%$, $40\%{\leq}y{\leq}95\%$, $5\%{\leq}z{\leq}60\%$, with x<z; the solidification structure of the initial alloy is primarily composed of M-T intermetallic compounds;

Step 2: Reacting the initial alloy with an alkali solution to induce hydrogen evolution and T-removal reaction; wherein by controlling the temperature and concentration of the alkali solution, the reaction interface is advanced inward from the surface of the initial alloy at an average rate of no less than 2 $\mu$m/min during the reaction process; during the reaction, the initial alloy undergoes nano-fragmentation through the hydrogen evolution and T-removal reaction, and nano-scale solid M-containing product is generated through shape and composition reconstruction; the shape of the solid M-containing product has at least one dimension in the three-dimensional direction not exceeding 500 nm;

Step 3: Collecting, after the hydrogen evolution and T-removal reaction is completed, the solid M-containing product from the reaction system, to obtain nano M oxide; wherein the nano M oxide includes at least one of low-crystallinity nano M oxide, crystalline nano M oxide, or nano hydrated M oxide; wherein the nano hydrated M oxide specifically refers to nano M hydroxide; the shape of the nano M oxide has at least one dimension in the three-dimensional direction not exceeding 500 nm.

2. The preparation method for nano metal oxides according to claim 1, wherein $0 < x \leq 15\%$.

3. The preparation method for nano metal oxides according to claim 1, wherein the temperature of the alkaline solution is $T_1$, with $T_1 \geq 60°C$.

4. The preparation method for nano metal oxides according to claim 3, wherein $100°C < T_1 \leq T_{f\ solution}$, where $T_{f\ solution}$ is the boiling point temperature of the alkaline solution at atmospheric pressure.

5. The preparation method for nano metal oxides according to claim 1, wherein ultrasound is applied during the hydrogen evolution and T-removal reaction to enhance nanoscale fragmentation and reaction rate, and the ultrasonic frequency is 20 kHz to $10^6$ kHz.

6. The preparation method for nano metal oxides according to claim 1, wherein the shape of the nano M oxide includes at least one of the following: film-like, particle-like, sheet-like, bar-like, rod-like, and flocculent.

7. A preparation method for nano metal oxides, **characterized by** performing heat treatment on the nano M oxides prepared using the method according to claim 1, thereby obtaining a nano M oxide with improved crystallinity.

8. A preparation method for nano metal oxides, **characterized by** comprising the following steps:

Step 1: Providing an initial alloy, wherein the initial alloy contains elements from M-class, T-class, and A-class; wherein the M-class elements include at least one of Cr, V, Nb, Ta, W, Mo, Mn, Y, La, Ce, Pr, Nd, Pm, Sm, Eu, Gd, Tb, Dy, Ho, Er, Tm, Yb, and Lu; the T-class elements include at least one of Al and Zn; the A-class elements include at least one of O, H, Na, K, Mg, Ca, Li, and Si; the composition of the initial alloy is primarily $A_xT_yM_z$, wherein x, y, and z represent the atomic percentage contents of the corresponding elements, and $0{\leq}x{\leq}$ 15%, $40\%{\leq}y{\leq}95\%$, $5\%{\leq}z{\leq}$ 60%, with x<z; the solidification structure of the initial alloy is primarily composed of M-T intermetallic compounds;

Step 2: Mixing the initial alloy with an alkali solution at a temperature of $T_1$, where $T_{s\_solution} < T_1 \leq T_{f\_solution}$; $T_{f\_solution}$ is the boiling point of the alkali solution involved in the reaction under atmospheric pressure, and $T_{s\_solution}$ is the freezing point of the alkali solution involved in the reaction under atmospheric pressure;

Step 3: Placing the mixture of the initial alloy and the alkali solution in a sealed container, then treating it at a temperature $T_2$ and pressure higher than atmospheric pressure for a certain period of time to collect a product, i.e., obtaion nano M oxide, which has modified morphology and/or composition compared to the intermediate products before the high-pressure treatment; wherein $T_2 > T_{f\_solution}$; the nano M oxide includes at least one of low-crystallinity nano M oxide, crystalline nano M oxide, or nano hydrated M oxide, and the nano hydrated M oxide specifically refers to nano M hydroxide; the shape of the modified nano M oxide has at least one dimension in the three-dimensional direction not exceeding 500 nm.

9. A nano metal oxide, **characterized in that** the nano metal oxide is prepared through the preparation method according to anyone of claims 1-8, with specific features including: the nano metal oxide is nano M oxide, wherein the M-class elements include at least one of Cr, V, Nb, Ta, W, Mo, Mn, Y, La, Ce, Pr, Nd, Pm, Sm, Eu, Gd, Tb, Dy, Ho, Er, Tm, Yb, and Lu; the nano M oxide includes at least one of low-crystallinity nano M oxide, crystalline nano M oxide, and nano hydrated M oxide, wherein the nano hydrated M oxide specifically refers to nano M hydroxide; the shape of the nano M oxide has at least one dimension in the three-dimensional direction not exceeding 500 nm.

10. A crystalline nano chromium oxide, **characterized in that** the crystalline nano chromium oxide is prepared through the preparation method according to claim 7, wherein the M-class element is primarily Cr; the particle size range of the crystalline nano Cr oxide is 3 nm to 150 nm, and after heat-treatment for crystallization, the particles of crystalline nano Cr oxide retain good dispersibility or loose structure between each particle, allowing further fragmentation and refinement along the grain boundaries through subsequent sand milling or ball milling processes, thereby obtaining ultrafine spherical or near-spherical nano chromium oxide particles.

11. An application of the product prepared according to the preparation method according to anyone of claims 1-8 in composite materials, catalytic materials, ceramic materials, refractory materials, advanced electronic materials, battery materials, chromogenic materials, wave-absorbing materials, wastewater degradation materials, antimicrobial materials, coatings, pigments, thermal spray materials, and sensors.

Figure 1

Figure 2

Figure 3

Figure 4

Figure 5

Figure 6

Figure 7

Figure 8

Figure 9

Figure 10

Figure 11

Figure 12

Figure 13

Figure 14

Figure 15

Figure 16

Figure 17

Figure 18

Figure 19

Figure 20

Figure 21

Figure 22

Figure 23

Figure 24

Figure 25

Figure 26

## INTERNATIONAL SEARCH REPORT

| | International application No. |
|---|---|
| | **PCT/CN2022/088502** |

**A. CLASSIFICATION OF SUBJECT MATTER**

C01G 23/00(2006.01)i

According to International Patent Classification (IPC) or to both national classification and IPC

**B. FIELDS SEARCHED**

Minimum documentation searched (classification system followed by classification symbols)

C01G

Documentation searched other than minimum documentation to the extent that such documents are included in the fields searched

Electronic data base consulted during the international search (name of data base and, where practicable, search terms used)

CNPAT, WPI, EPODOC, CNKI: 纳米, 氧化物, 金属, 制备, 合金, 碱溶液, 脱, 超声, nanometer, oxide, metal, prepar+, alloy, alkaline solution

**C. DOCUMENTS CONSIDERED TO BE RELEVANT**

| Category* | Citation of document, with indication, where appropriate, of the relevant passages | Relevant to claim No. |
|---|---|---|
| X | CN 111634938 A (DONGGUAN UNIVERSITY OF TECHNOLOGY) 08 September 2020 (2020-09-08)<br>description, paragraphs [0026]-[0078] | 1-11 |
| A | CN 101787502 A (INSTITUTE OF CHEMISTRY, CHINESE ACADEMY OF SCIENCES) 28 July 2010 (2010-07-28)<br>entire document | 1-11 |
| A | CN 110721318 A (WENZHOU MEDICAL UNIVERSITY) 24 January 2020 (2020-01-24)<br>entire document | 1-11 |
| A | CN 104162679 A (NEKSON POWER TECHNOLOGY CO., LTD.) 26 November 2014 (2014-11-26)<br>entire document | 1-11 |
| A | JP 2008105912 A (NATIONAL INSTITUTE OF ADVANCED INDUSTRIAL & TECHNOLOGY) 08 May 2008 (2008-05-08)<br>entire document | 1-11 |

☐ Further documents are listed in the continuation of Box C.    ☑ See patent family annex.

| | |
|---|---|
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **13 November 2022** | **28 November 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/088502**

| Patent document cited in search report | | | Publication date (day/month/year) | Patent family member(s) | | | Publication date (day/month/year) |
|---|---|---|---|---|---|---|---|
| CN | 111634938 | A | 08 September 2020 | CN | 111634938 | B | 09 November 2021 |
|    |           |   |                  | WO | 2021253766 | A1 | 23 December 2021 |
| CN | 101787502 | A | 28 July 2010 | CN | 101787502 | B | 05 October 2011 |
| CN | 110721318 | A | 24 January 2020 | None | | | |
| CN | 104162679 | A | 26 November 2014 | None | | | |
| JP | 2008105912 | A | 08 May 2008 | None | | | |

Form PCT/ISA/210 (patent family annex) (January 2015)